# EUROPEAN PATENT SPECIFICATION

(11) **EP 1 461 984 B1**
(45) Date of publication and mention of the grant of the patent: **18.06.2014**
(21) Application number: 02751444.7
(22) Date of filing: 20.08.2002
(51) Int. Cl.: H05H 3/06, G21B 1/00

(54) **NEUTRON GENERATOR APPARATUS**
NEUTRONENQUELLE-VORRICHTUNG
GENERATEUR DE NEUTRONS

(30) Priority: 21.08.2001 GB 0120280
(43) Date of publication of application: 29.09.2004
(73) Proprietor: Gradel S.à.r.L., 5691 ELLANGE (LU)
(72) Inventor: Sved, John, 27755 Demenhorst (DE)
(74) Representative: Office Freylinger
(86) International application number: PCT/GB2002/003854
(87) International publication number: WO 2003/019996

(56) References cited:
- EP-A- 0 441 261
- WO-A-95/30235
- US-A- 2 920 235
- US-A- 4 675 145
- MILEY G H: "A portable neutron/tunable X-ray source based on inertial electrostatic confinement" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 422, no. 1-3, 11 February 1999 (1999-02-11), pages 16-20, XP004161792 ISSN: 0168-9002
- MILEY^A G H ET AL: "The IEC star-mode fusion neutron source for NAA - status and next-step designs" APPLIED RADIATION AND ISOTOPES, PERGAMON PRESS LTD., EXETER, GB, vol. 53, no. 4-5, November 2000 (2000-11), pages 779-783, XP004206856 ISSN: 0969-8043 cited in the application
- GU ET AL: "A portable cylindrical electrostatic fusion devicre for neutronic tomography" FUSION TECHNOLOGY, AMERICAN NUCLEAR SOCIETY. LAGRANGE PARK, ILLINOIS, US, vol. 3.2, no. 26, 1 November 1994 (1994-11-01), pages 929-932, XP002071074 ISSN: 0748-1896 cited in the application
- OHNISHI M ET AL: "Study on an inertial electrostatic confinement fusion as a portable neutron source" FUSION ENGINEERING AND DESIGN, ELSEVIER SCIENCE PUBLISHERS, AMSTERDAM, NL, vol. 42, no. 1-4, September 1998 (1998-09), pages 207-211, XP004149793 ISSN: 0920-3796
- MILEY G H ET AL: "Simulation studies of optimized electrode designs for a cylindrical IEC" IEEE CONFERENCE RECORD - ABSTRACTS. 1997 IEEE INTERNATIONAL CONFERENCE ON PLASMA SCIENCE (CAT. NO.97CH36085), IEEE CONFERENCE RECORD - ABSTRACTS. 1997 IEEE INTERNATIONAL CONFERENCE ON PLASMA SCIENCE, SAN DIEGO, CA, USA, 19-22 MAY 1997, pages 187-188, XP002223141 1997, New York, NY, USA, IEEE, USA ISBN: 0-7803-3990-8

## Description

### FIELD OF THE INVENTION

This invention relates to an electrostatic reactor for neutron and associated particle emission, and in particular though not exclusively to an elongated configuration cylindrically symmetric reactor that utilizes fusion reactions between low atomic number nuclei in a non-point like elongated collision zone.

### BACKGROUND OF THE INVENTION

Confinement of ionized gases has been studied for several applications that range from surface treatment of materials to controlled nuclear fusion for the production of energy in amounts greater than a required input power. Nuclear fusion grade collisions of low atomic number nuclei have been utilized to produce particles such as neutrons, protons and various fragments of the nuclei that constitute the fused product. The means of colliding the atomic nuclei have utilized particle accelerators, laser photon pressure and heating for inertial confinement fusion, magnetic plasma confinement fields to confine hot plasma and electrostatic confinement fields to focus ions into a collision zone.

Typical examples of such fusion reactions include:
a) iD2 + 1 D2 ->2He3 (0.82 MeV) +0111 (2.45 MeV)
b) iD2+iD -^{∧}iT3 (1.01 MeV)+1 p1 (3.02 MeV)
c) !D2+iT3-->2He4 (3.5 MeV)+On1(14.1 MeV)
d) !D2+2He3->2He4 (3.6 Mev)+1 p1 (14.7 Mev)

Neutrons have been applied to the interrogation of materials to help determine the structure and composition of the materials. The observable interaction products are well documented as gamma photon energy spectral signature data under categories of application such as Neutron Activation Analysis, Thermal Neutron Analysis and Prompt Gamma Neutron Activation Analysis, to name only a few of the common terms, h these applications it is necessary to have a flux of neutrons that can pass into the material that is to be interrogated. The source of the neutrons may be a nuclear fission reactor which is a very expensive option; radionuclide decay where neutrons are emitted by an isotope such as californium 252; charged particle accelerator machines that target protons or deuterons onto a target which holds certain low atomic number elements in order to yield neutrons from fusion or spallation reactions; compact sealed versions of the accelerator method; and prior art electrostatic devices referred to as inertial electrostatic confinement (IEC) or inertial electrostatic fusion (IEF) or "fusor".

Neutrons are attractive for many industrial analysis, medical and security inspection applications because they are very penetrating and can have residual non-biological side effects that are so small that they cannot be measured by any known technology. Unlike X-rays and gamma rays they will interact with other atoms/isotopes of materials which will in turn produce a gamma photon energy signature. For example, neutrons will interact with nitrogen which is the major constituent of all chemical explosives. The neutron interacts with the nitrogen nucleus, which in turn gives off a characteristic energy gamma photon. A standard commercially available gamma spectrum detection system can find concealed explosives in baggage and it is very difficult to shield out the neutrons without raising suspicion. Enhancement of the gamma detection and recognition electronics and software can enable a commercially attractive explosives detection system to be feasible if a compatible neutron source can be integrated into a sufficiently compact, robust, long lived and safe system.

From the industrial customer point of view, whilst neutrons are attractive they are hard to produce on demand conveniently or cheaply. The radionuclide source of neutrons has been the lowest cost source of neutrons but the inability to switch off the source has imposed difficult operational safety requirements. Solving these design requirements for practical neutron applications systems has added to the cost of manufacture and the cost of operation. In the case of the frequently used californium 252 neutron source, there is a half life of 2.65 years. This requires the operator of an industrial measurement system to top-up the Cf252 neutron source every two and a half years if a reduction of fifty percent of the neutron flux can be tolerated. There is a recurring cost associated with procurement, safety monitoring and ultimate authorized disposal of the radioisotope neutron source capsules:

An alternative technology that has been offered commercially for about 30 years is the so-called sealed tube neutron generator. This technology is based on the trigger device on H-bomb nuclear weapons where an intense flux of neutrons is generated to initiate the chain reaction. Typically, a sealed tube neutron generator uses an electric field to accelerate deuterium ions from an appropriate source into a tritium target so as to bring about a fusion reaction with accompanying neutron generation. A typical sealed tube neutron generator uses a deuterium-tritium fusion reaction to yield 14.1MeV energy neutrons. The shelf life of such a device must be very long and is constrained by the 12 year half life of tritium. The operational life of the device is very short prior to its total destruction within the nuclear weapon. These sealed tube devices have been commercialized but have found almost no acceptance in industrial settings where the requirement for economic life cycle costs have been too severe for that technology. Either Cf252 neutron sources have been most often used or there has been no implementation of a neutron interrogation system. The industrial user would rather select another non-neutron technology after trading the advantages and disadvantages.

The sealed tube neutron generators have an operational life or endurance that is typically only a few hundred hours. Recent products on the market claim 2000 hours or even 4000 hours before tube replacement. The cost of exchanging of a sealed tube device, which includes authorized recovery of the tritium gas, is prohibitively high. Cf252 neutron sources can still compete against conventional sealed tube neutron generators. If the conventional sealed tube neutron generators could demonstrate an operational lifetime of 10,000 hours or better still 20,000 hours, there would be less of a cost different compared to Cf252 neutron sources. However the routine tube replacement cost would have to be comparable to or less than the Cf252 top-up cost.

A further problem with the sealed tube neutron generator is that the obtainable lifetime is achieved by a combination of compromises. The fusion reaction rate is reduced from the maximum that the device can theoretically deliver by a reduction of the applied ion beam current. This has the desired effect of reducing the erosion rate of the solid target. This may be described as de-rating the device output performance in order to lengthen the device operational life. A consequence is that the neutron production rate is also reduced. A typical specified neutron production rate for applications in on-line minerals analysis is 1 x 10⁸ neutrons per second total output. Californium 252 sources of 2 x 10⁸ n/s are utilized. After 2.65 years the Cf252 source strength will have reduced to 1 x 10⁸ n/s. Therefore a sealed tube neutron generator has to deliver at least 1 x 10⁸ n/s to be comparable. The costs of manufacturing have forced sealed tube neutron generator manufacturers to modify existing weapons-derived devices. Consequently, a deuterium-tritium isotope fusion reaction has to be utilized to achieve the 1 x 10⁸ n/s reaction rate. If a deuterium-deuterium fusion reaction were to be used, the same sealed tube device, filled only with deuterium, would emit about 2 x 10⁶ n/s.

A further problem with the sealed tube neutron generators that utilize the D-T fusion reaction is that the D-T fusion neutron energy is 14.1MeV. The californium 252 decay neutrons range in energy from about 1MeV to 10MeV. The mean energy is about 2.1MeV. There are also various gamma photons emitted as part of the decay products. While D-T 14MeV neutrons are useful because they are more penetrating than 2.1MeV neutrons, and while the higher energy enables certain interactions with certain elements such as oxygen, there are also problems. In particular, there are neutron interactions that rely on low energy or so-called thermal energy neutrons where the neutron has been slowed down to kinetic energies amounting to tens of KeV or less. In order to slow the high energy neutrons, moderator materials are used to cause energy reduction through collisions. The released energy is manifested as other energy forms such as gamma photons. In some applications these photons act as unwanted noise that masks the desired gamma photons from thermal neutron interactions. Therefore it is often necessary to use source neutrons of as low an energy as practical. So Cf252 neutrons of mean energy 2.1MeV would be preferred over 14.1MeV D-T neutrons. Clearly in this example a mono 2.45MeV D-D neutron generator would be more preferred if other requirements would be compatible.

In some applications, such as Boron Neutron Capture Therapy (BNCT) for the treatment of inoperable cancer tumours, the neutron flux must be precisely defined in order to be generally accepted as part of an approved medical therapy. The quality of the neutron flux from accelerator sources or sealed tube neutron generators is deemed by some commercially organized BNCT researchers not to be ideal. Accelerator spallation neutron sources will generate a range of neutron energies. The moderation and collimation of a range of neutron energies is obviously more difficult than for mono energy neutrons. Sealed tube devices do provide mono energy neutrons but suffer from unreliability of the neutron output as do the accelerator spallation neutron sources. The solid targets that these devices use suffer from altered characteristics due to the damage they incur through use. The electrostatic confinement of fusible ions in a neutral gas and ion mix plasma does not suffer from target degradation. The reactants are continuously renewed in the fusion zone. Reactant gas contamination can be mitigated so that the neutron output quality can be constant for a given set of controllable operating parameters.

An advantage that any electrical neutron generator should offer is the ability to switch on and off repeatedly to create a pulsed mode of operation. The pulse mode duty cycle may range from minutes or seconds of ON time and similar intervals of OFF time to milli-, micro- and even nano-seconds. It is not necessary, cost effective or perhaps not practical to offer the entire pulsing duty cycle range in every neutron generator. The main advantage of the pulsing mode is to cut off the noise caused by the higher energy neutron interactions and then detect the thermal neutron or other delayed interactions where prompt gamma photons are not emitted instantaneously. The implementation of mechanical shutters to make Cf252 into a pseudo-pulsed neutron source is not practical or cost effective.

A further cost consideration is the often requested configuration of the neutron source as a non-point of origin. The neutron flux intensity decreases as the inverse square of the distance from the point of origin in the case of a point-like source. In many industrial applications the object that is to be interrogated by the neutrons has a large characteristic size. For example, a mineral stream on a conveyor belt may be so wide that the extremities will receive a significantly reduced flux of neutrons compared to the middle portion. This has undesirable consequences for the efficiency of the detection of gamma photons arising from the neutron interactions. Optimization of the gamma detector configuration may not be sufficient or cost effective. A second point source neutron emitter is often introduced to mitigate the edge losses.

With the usage of two point sources, there is a doubling of the cost of the neutron source. This is tolerated for some commercial neutron analysis systems where Cf252 has been the only practical source. However, it is more problematic for a neutron application system that would use two neutron generator devices. Since each individual neutron generator system consists of the reactor device, a high voltage power subsystem, an electronic controller sub-system and ancillary cooling sub-system, multiple copies of the equipment would be required. The operation of two or more sealed tube devices connected in parallel to one set of appropriately specified ancillary sub-systems seems to be only a marginal cost reduction compared to two separate sealed tube neutron generator sets.

A more ideal line source that is made from discrete Cf252 radioisotope neutron sources can be contemplated. Such a linear geometry Cf252 neutron source has been proposed for land mine detection. In such a configuration Cf252 pellets would be spaced in a line at intervals optimized so that the gamma detectors would not suffer from the non-uniformity of the neutron flux field. The length of the land mine detection linear neutron source that would necessarily be suspended in front of a suitable vehicle may be as much as 4 metres. This implies that many Cf252 pellets would be used. A design constraint that can be expected is that the total activity level should remain low enough to gain a permit for operation. This may reduce the effectiveness of the land mine detector system. Higher radioactivity levels may not be permitted without severe design requirements for the withdrawal and shielding of the numerous capsules of Cf252. Damage to the system by an exploding land mine is a further difficulty. Neutron generators seem more appropriate since they can be instantly switched off. However, the use of several conventional sealed tube neutron generators would be a significant fraction of the total system cost. Further complexity would arise from the control problem associated with matching of output of multiple sealed tube units. A sealed vessel containing a linear solid target and a particle beam deflection system can be envisaged. The particle beam would be deflected much like electrons in a cathode ray tube or television picture tube to scan back and forth along the target. The neutron emission would exit the device as a moving spot or point source. Such a system is considered to be a very expensive option due to the inherent complexity and reliability concerns. A long linear configuration neutron generator reactor chamber in accordance with embodiments of the present invention is expected to overcome such difficulties.

A non-point source geometry may be advantageous for the design of neutron collimation systems. Such peripheral systems may include neutron moderation to reduce the mean energy of the collimated flux of neutrons. The object of neutron collimation is to establish a beam of neutrons with specified flux density and neutron energy characteristics. Since neutrons are not charged particles, they do not respond to electrostatic or magnetic fields. Collimation devices rely on the interaction of neutrons with certain materials to obtain reflections and refraction-like changes of velocity. It may be envisaged that embodiments of the present invention will offer new conceptual configurations of neutron source and collimation systems for specific applications.

The sealed tube neutron generator technology is inherently age-limited by the unavoidable erosion of the solid target. This component is a metal such as titanium that has been impregnated with tritium or deuterium gas. The incident high energy deuterons have the effect of causing sputter erosion of the target. The sputter product condenses as a metallic film on the inside surfaces of the sealed tube device. The use of voltages near 100 kilovolts results in a short circuit condition as the metallic film builds up. Even before this ultimate failure mode, the highly localized beam causes a hot spot and associated gas depletion within the target. Various neutron yield degradation mitigation schemes have been employed but the fact remains that the best guaranteed lifetime of a sealed tube neutron generator is only 4000 hours.

The present invention has been conceived as a new technology that addresses the cost problems associated with Cf252 and the short life neutron generators as described above. The elimination of solid target erosion is an attractive possibility of the Inertial Electrostatic Confinement IEC concept. The constant renewal of the colliding nuclei within the fusion target zone is a further attraction for producing a constant neutron yield. The demonstration and experimentation in three different laboratories of a unique linear geometry electrostatic nuclear fusion reactor which is not the present invention has been an additional incentive to create a practical system for commercial industrial application.

A person of ordinary skill would doubt the longevity of both spherical and cylindrical IEC devices based on observations of experimental units where stainless steel wire electrodes would suffer structural failure after perhaps 10 - 20 hours of operation at voltages ranging from 20 to 60 kilovolts and applied current of approximately 5 to 30 milliamperes. Such IEC devices include those disclosed in Hirsch (US 3,530,497) and Farnsworth (US 3,258,402) and also in Miley et al. (WO 95/30235). The mode of failure was metal vaporization or erosion and deposition on the surface of insulator components which would inevitably lead to short circuit conditions. Certain strategies to mitigate the metal coating problem failed. This problem has, however, been overcome by the present applicant and has been demonstrated in a confidential commercial production prototype based on spherical IEC concepts. The lifetime of a life test demonstration unit has exceeded the claimed lifetime of the best commercial sealed tube beam-solid target neutron generator by at least 50% and is expected to be able to be run indefinitely. A mean time between failures of 20,000 hours or even more can be expected for some embodiments of the present invention.

For commercial success, embodiments of the present invention should be simple enough to enable manufacturing, operation and maintenance costs to be less than the life cycle costs associated with californium 252. This mandates a reduction of the piece part count in the assembly, low piece part manufacturing costs, quick assembly and inexpensive quality assurance checks. Individual components or subassemblies should have high durability in their intended function within embodiments of the present invention. The combination of sub-systems and their functions should preferably reduce operation control of the variable parameters so that automated control means can be of reduced cost when implemented by one of ordinary skill in the art. The prior art referenced herein is not capable of long operational life and is intended only to achieve high fusion rates for demonstration purposes. None of the prior art discloses features intended to extend operational life to a duration of thousands of hours or greater. None of the prior art proposes methods or means of cost effective automated control and operation. The prior art is clearly intended only as apparatus for the purpose of laboratory demonstration of proof of principle.

Confinement of dense ionized gases for nuclear fusion has focused on achievement of power production. As the density of ionized gas increases, various instabilities or deviations from perfect symmetry are encountered which require more complex configurations of magnetic or electrostatic fields. Steady state operation of most fusion devices using laser or magnetic methods is characterized by short periods of operating stability while the plasma is held and heated in a defined spatial region. The size of the experimental machines is such that they are too great to be considered as "table-top" devices for neutron production. A miniature laser fusion device described as having "table-top" dimensions purports to be a commercial proposition. It uses lasers to shoot tiny droplets of liquid hydrogen isotopes such as deuterium or tritium and thereby induce the compression and temperature conditions for fusion. Of necessity the device is pulsed. It must include a high grade vacuum pump system for the continuous removal of the produced gas in the reaction vessel. It must have a cryogenic subsystem with a precision nanometre scale droplet production subsystem. The total cost of such a system can be sufficiently high to be of no interest to industry. This approach to commercially viable neutron generation is of little interest in connection with, and has no fundamental relevance, to the present invention, and will not be further considered.

Indeed many of the fusion reactor concepts are not relevant because of their intrinsic large scale, complexity and high cost relative to embodiments of the present invention. A cost of manufacture of less than 30,000 Euro is deemed necessary to be commercially viable as a neutron generator to compete with californium 252 of similar neutron output rate. This constraint imposes consideration of electrostatic plasma confinement which has been studied as a candidate for scaling up to fusion power. As noted by Bussard U.S. Pat. No. 4,826,646 of May 2, 1989, the goal of fusion research is fusion power. A novel feature of embodiments of the present invention stems from the omission of study of fusion reactor configurations that cannot be scaled to fusion reaction rates approaching 10¹⁴ per second.

### DETAILED DESCRIPTION OF THE PRIOR ART

Two cylindrical IEC devices have been cited as prior art. Hirsch et al. U.S.Pat. No. 3,530,497 includes an embodiment for an elongated version of the spherical IEC device as indicated below and is hereinafter referred to as "radial cylindrical IEC". Nadler, Miley et al. disclose an embodiment of what is described as a cylindrical Inertial Electrostatic Confinement device as described below and hereinafter referred to as "axial cylindrical IEC".

Farnsworth refers to a spherical electron tube structure. It is clear in the text of U.S. Pat. No. 3,258,402 and apparent in its figures that Farnsworth's device is of a spherical or substantially spherical configuration. Use of the word "tube" is with reference to electronic or vacuum tube technology. A cylindrical configuration is not offered as an embodiment.

Farnsworth states in U.S. Pat. No. 3,258,402 that a central spot was an origin of fusion collisions or reactions. Farnsworth discusses the use of secondary electron emission in U.S. Pat. No. 3,258,402, col. 22 lines 41-60, as a means of increasing the ion population.

Farnswoth in U.S. Pat. No. 3,258,402 elaborates with regard to electrostatic lens calculations. The configuration disclosed is for an inner anode and outer cathode and indeed quite a different configuration from embodiments of the present invention. The calculations are stated to be based on coaxial cylindrical shapes instead of conical shapes and that slight changes in dimensions may be anticipated to achieve pre-specified operating characteristics.

Hirsch U.S.Pat. No. 3,530,036 also teaches that ion collisions occur at the centre to produce nuclear-fusion reactions. Hirsch proposes improvements to the means of ion production whereby a drift chamber that is external to the anode chamber wall is used to ionize the reactant gas, extract the neutral gas and draw the ions through many holes in the anode wall in order to establish many pencil beams of ions which are aimed at the centre of the spherical apparatus.

Bussard U.S. Pat. No. 4,826,646, of May 2, 1989, describes a device that uses special magnetic fields to confine electrons into an electrostatic potential well and to confine ions injected in the cusp regions of the magnetic field. The net charge of the plasma contained in the device is negative. Bussard teaches that nearly all of the fusion energy generated in the device will be generated in and around the centre of the (structurally-empty) cavity confined by the external magnetic field, at the largest possible distance from the wall of the system.

Bussard U.S.Pat. No. 5,160,695, of Nov. 3, 1992, describes an improvement called Inertial Collisional Compression (ICC) with the objective of increasing ion density sufficient to enhance nuclear fusion reactions within the core of a substantially spherical electrostatic device. Bussard states that the principles of ICC will work as well for cylindrical converging flow of ions as for spherical flows. No cylindrical embodiment is described. The ICC resonant oscillations are purported to begin with the attainment of certain parameters. The characteristic inner cathode electrode radius is required to be greater than 20cm. Embodiments of the present invention may be limited to a corresponding component size range of 1cm to approximately 10cm.

Hirsch et al. U.S.Pat. No. 3,530,497 describes embodiments of both a spherical and an elongated spherical configuration where a cylindrical extension of the device is inserted between the hemispherical ends. Hirsch also discusses a toroidal form where the cylindrical extension is distorted from a linear form so that its open ends meet each other. These embodiments refer to a configuration of electrodes which is intended to focus ions towards the centre point in the spherical configuration or centre line in the elongated embodiments so that many of the ions will have a definite probability of collision in the central region. The disclosure of Hirsch et al. is concerned with the provision of an area source of ions which spherically encompasses the bipolar configuration in the centre. It also proposes tantalum or the like wire for the structure material of the electrodes. This concept is the radial cylindrical IEC.

Nadler, Miley et al. Fusion Technology Vol. 20 Dec 1991 and Vol. 21 May 1992 report on the investigations of a spherical IEC device operated in a "glow discharge" mode where a high voltage on the central cathode grid electrode drives a gaseous discharge to produce ions and an "ion gun" mode where ions are injected. The theory for the formation of multiple potential wells for virtual anodes and cathodes within the hollow cathode is reviewed and the collision mechanisms of beam-beam and beam-background is noted. The observed stability is discussed and explained as a balance of the central ions and electrons in a dense core to prevent excess space charge. Measurement of the proton trajectories by means of a proton collimator is reported as confirmation of the depth and size of accumulated ion space-charge and associated virtual anode. Coincident neutron source strength measurements were made. The experimental apparatus appears to be based on the Hirsch et al U.S. Pat. No. 3,530,497. The analysis of the measurements was reported to confirm the theorized potential well structure. The probability of fusion reactions in the interelectrode region was assumed lower than within the cathode grid because ion charge exchange would cause lower energies and these positive charge ions would be slowed more effectively after exiting the cathode region. Subsequent doctoral thesis work with proton collimator measurements with pulsed glow discharge at higher current was obtained to further support the theorized central concentration of fusion reactions and the density redistribution with the onset of virtual anode formation. This can be visualized in a planar section through the centre of the spherical electrode system as a Gaussian curve with the peak centred at the centre of the sphere. As the current increases the peak divides into two peaks that are equally offset from the centre. These peaks are purported to indicate the existence of the virtual anode.

If this structure was real, then a precise measurement of the neutron direction and density distribution should confirm the proton direction and density measurements as a similar Gaussian curve or the dual peak variant. When such neutron measurements were performed on the commercially developed spherical IEC device, the distribution was more like a plateau extending well beyond the diameter of the cathode. There was no discernable central concentration of fusion collisions. Contrary to the expectation of a substantial point source of approximately 10 mm diameter the neutrons were measured to be emitted substantially from a spherical zone of approximately 100mm diameter. It is believed that certain procedures and assumptions in the above proton collimator research may account for the discrepancy.

The conclusion is that the fusion collisions may occur with near equal probability within the cathode grid or outside of it as the potential gradient accelerates the ions to high enough energy for fusion, despite charge exchange losses. This is at least consistent with observations for the relatively high gas pressure regime that is necessary for glow discharge operation. Lower pressure operation is not of concern to the present invention.

The glow discharge mode, which is of interest in embodiments of the present invention, has three main variants that are described by Nadler et al, Fusion Technology, Vol. 21, May 1992. The so-called "star mode" is of relevance to embodiments of the present invention. It is so named because of the formation of radial beams that cross the centroid of the spherical centralized cathode grid electrode and pass through diametrically opposed holes defined by the wire structure of the grid. The beams or pencil ion beams or spokes or so called micro-channels have been shown to be composed of both ions and electrons. The grid holes of the cathode form electrostatic lenses. The net effect of the convergent and divergent electrostatic lenses is a stable electrostatic field that is determined by the space charge distribution as well as the applied voltage.

The Glow Discharge Star Mode micro-channels or star beams have been more recently observed not to exist within every diametric pair of holes in a spherical grid that has of the order of 100 holes defined by either three or four arc segment sides. They are observed to form preferentially with larger hole pairs. They are also observed to form when the beam length will be longest from anode wall to wall via the centre of the cathode grid. The sensitivity to central location in a spherical or cylindrical or elongated anode of the inner cathode is not high. Deliberate off centre mounting by ten percent of the diameter caused no change in fusion rate for the same voltage and current. A severe asymmetry condition where the anode had a large hole through which the cathode could be inserted gave rise to diametric paths through hole pairs in which one side of the beam would be more than twice as long as the other. The asymmetric beam would pass out through the large hole in the spherical anode wall to a wall of an attached chamber of the sealed reactor. The size of the hole pair was relatively small. There is generally competition between hole pair size and diametric star beam length. The practical construction of spherical cathode grids with diametrically opposed holes of the same size, shape and area is very problematic. Soccer ball or geodesic layouts require a degree of investment in tooling and assembly process development that would not be cost effective. Therefore practical implementations have usually been assemblies made of wire that is stiff enough to hold a curve, even at elevated temperature approaching the wire melting point. These constructions are briefly described as a set of circumferential rings that are arranged to give diametric hole pairs where the two holes have near identical areas. An exception seen in the prior art is the so-called latitude and longitude arrangement of the wire elements. The circular cross section wire elements have been replaced by rectangular cross section vanes in a commercially oriented spherical IEC neutron generator as shown in Miley & Sved, Applied Radiation and Isotopes, Vol. 53 (2000), No. 4-5, pp. 779-783. In a 35mm diameter spherical grid the practical number of circumferential rings is seven, while an 80mm diameter grid has been used with thirteen circumferential rings. Still larger spherical grids can accommodate more circumferential structural rings.

As the cathode grid size is increased there is an improvement in the heat radiation from grid to chamber wall. This provides a vital component working temperature reduction effect. For example the 35mm grid mentioned above must survive a working temperature of about 2000° C. The 80mm grid has a working temperature of less than 600°C at the same electrical power input. A reduction of grid temperature is desirable to mitigate thermal stresses and to mitigate grid material vapour pressure. At the working pressure of approximately 1 x 10⁻²mbar, grid temperatures above 1000°C will give unacceptable vapour pressure for many candidate metals. High vapour pressure will result in migration of metal atoms. Some will land on the insulator surfaces and eventually build up conducting paths that will enable short circuit conditions. The prior art has not considered such teachings concerned with the mitigation of the failure mode discussed above.

Research attempts have been made to construct an electrostatic confinement device that is in concept a cylindrical slice through the diameter of the spherical IEC device. This is the axial cylindrical IEC concept. It has been reported in Gu, Javedani, Miley, Fusion Technology Vol. 26, 1994, pp. 929-932 and Iwamoto et al and Yamamoto et al. at the 14th APS Topical Meeting on the Technology of Fusion Energy October 15-19, 2000. The typical cylindrical IEC Fusion device dimensions are approximately 0.7 to 1.5m in length with a cylindrical vacuum vessel diameter of about 100mm. At each end is an anode with some concave surface form to provide electrostatic focus to a point on the long cylinder axis centre line towards the middle. A symmetrical array of hollow cylindrical electrodes on either side of the middle point is installed so that a cathode is at the middle of the vessel and the cylindrical electrodes are coaxial on the long cylinder axis. The adjacent pair of hollow cylindrical electrodes are anodes at tens of kilovolt voltage. Variations of this basic configuration have been tested to investigate the practical performance versus the theoretical models. There are several research advantages of this device concept. The cathode potential can be selected to be the value close to the ground potential so that access to the core region is easy from the side, thus enabling diagnostics of the core region. The electric feed-through line to the cathode does not destroy symmetry of electric fields for ion focus which is a problem in spherical devices. The simple tubular electrodes can be made more complex in order to shape the electrostatic field.

The cylindrical slice IEC device described in the above paragraph has been investigated in both steady state direct current mode and in pulsed current mode. When in a glow discharge mode of operation, the cylindrical slice IEC device produces a linear narrow beam that is similar to a spherical IEC star mode beam. The theoretical work suggests that ions and electrons follow linear trajectories back and forth along the central axis. The dominance of beam-beam versus beam-background neutral gas fusion interactions is a primary research question. The beam-beam interactions are to be maximized or at least to dominate in order to achieve desired super linear scaling of fusion rates with increased input current. In the glow discharge mode, beam-background collisions dominate. The ultimate practical fusion rate is therefore limited to perhaps 10¹⁰ per second. This would be quite acceptable for many neutron generator applications.

The axial cylindrical IEC (as disclosed, for example, in Miley et al. WO 97/00519) is purported to be a precursor for a portable, line source neutron generator. Neutrons are produced throughout the single beam. However problems persist with this device as a candidate for practical applications and in particular as a cost-effective approach for line source neutron generation. The device will have at least three high voltage, vacuum feed through assemblies that penetrate the vacuum vessel wall at right angles to the central axis of the cylinder. Further high voltage, vacuum feed through assemblies are required at each end of the cylindrical vessel. The cylindrical vacuum vessel must be a non-conductor or internal insulation will be required. This will further complicate the construction and assembly sequence. The component count will increase. Further complexity of component design arises when the problems of electrode and feed through design are solved to avoid various failure modes such as unwanted ion bombardment of chamber wall or insulator surfaces. The number of vacuum penetrations gives rise to concerns about the cost effective manufacture of a hermetically sealed chamber with a leakage rate low enough to support sealed operation for a number of years. Further auxiliary electrodes will further exacerbate the manufacturing cost of the reactor chamber and the peripheral electronic sub-systems. The cylindrical slice IEC device is regarded as unlikely to be a basis for a commercial line source neutron generator.

Prior art has not addressed the issue of longevity of fusion-based neutron generators. In particular, the often encountered problem of apparatus failure due to internal short circuits has not been addressed. Such short circuits can occur if an insulator surface becomes sufficiently coated with vapour deposited metal so that the gas glow discharge distance is reached and conductive paths established. A simple solution is to design long insulator surface paths. This approach can lead to impractical dimensions for an industrial neutron generator. Embodiments of the present invention seek to provide advantageous electrode configurations that directly mitigate or reduce the migration of metal atoms from the electrodes to the insulator surfaces.

Early researchers had assumed that the mitigation of spherical cathode grid erosion by sputtering caused by ion would require geometric transparency as high as possible in the radial direction. The star mode indicated that there was a very significant electrostatic optics effect due in part to the distortion of the equipotential surfaces. Further investigation questioned the assumption of a uniform distribution of where the ions are "born". Even with an almost impractical 99% transparency, there would still be a significant number of ion-grid collisions that would adversely effect efficiency and longevity. The observation that a commercially developed spherical IEC device seemed to not suffer from grid erosion supports the assumption that there are channelling mechanisms in the IEC environment. The effective transparency is much greater than the practical geometric or structural transparency of 0.8 to 0.9.

Most ions are channelled in the spokes or beams that pass through the centroid of the holes. The holes do not have to be of a regular shape. Ions that enter the opening in a region too near to the grid structure will be excessively deflected and lost. Thus, only the ions passing through the diametrically opposed centroids are proposed to have a chance to recirculate and remain available for a fusion collision. Other interactions occur with greater probability than the fusion collisions. The ion beams and the associated electrons in the micro-channel beams cause local ionizations in the beam volume and thus increase the ion population.

The energy or momentum of the ion also has influence. If an ion is "born" near to the grid, its acquired momentum as it reaches the grid with be relatively low so that its trajectory will be more easily distorted by the potential surface. These trajectories are most likely to curve sufficient for collision with the grid structure. Ions "born" closer to the anode are able to acquire a higher momentum as these "fall" into the potential well. There is a "zone of acceptance" within which the new born ions will form into the micro-channel trajectory. The best ion origin location is near the anode wall since these ions will have the least radial velocity component in the random distribution as noted in the prior art.

The zone of acceptance is flared out from the narrow beam or channel by a net deficiency of ion space charge relative to the electrons streaming to the anode vessel wall. This flared region widens the zone of acceptance for channelling the low energy ions born near the anode. These ions are born from electron-impact ionization with the background neutrals. Production of ions near the anode is therefore a very attractive approach to higher ion utilization. This region is sometimes referred to as the edge-plasma region. It is known that the electron-impact ionization cross section occurs near 100eV for deuterium and it decreases with increased energy in a log-linear relationship. The majority of the electrons in the IEC environment originate from secondary emission by particle collisions with the grid and ionization in the central region. These electrons are accelerated to high energies and stream to the anode wall. Impact ionization is therefore highest near the central cathode grid. Thus ions born from electron-impact collisions near the cathode grid are not available for fusion because they are not confined in the micro-channel beams.

A saturation effect can be anticipated and is seen to occur, although several other factors may also contribute the IEC environment. Ignoring the other mechanisms, a simple increase of the voltage is anticipated to increase the fusion collision cross-section. This is indeed observed but the increase flattens. One flattening mechanism can be the reduction of ionization rate at the anode wall because the electron-impact cross section is increased at higher electron energies.

Another observation is that the electron emission of the cathode grid can significantly influence the fusion rate. The use of identical geometry grids made of different metal gives a significant difference of fusion rate with all other parameters the same.

Prior art and the IEC literature have proposed several means of producing ions and mitigating collisions that only cause losses. Methods that produce low energy ions include, electron emitter or dispenser cathodes that provide electrons that are able to oscillate about one or two external grids. The ionization in the external region near to the anode wall will contribute the ions to the "zone of acceptance" for channelling into the spokes or beams. There is some question about the losses such as defocusing that may be introduced. However the complexity and consequential cost of manufacture are too high for the gain in performance. The reliability, and longevity of additional insulator stand-offs, delicate large grids, additional vacuum electrical feed through penetrations in a sealed system plus the short operational life of electron emitters and the deleterious effect of an aggressive hydrogen gas-plasma atmosphere on the dispenser cathode, all persuade one to seek a more cost effective technology. In addition, electron emitters demand significant power in the atmosphere of the operating IEC environment. These observations can be extended to the prior art proposals for ion gun technology.

More passive means of producing ions near the anode wall have been proposed in the IEC research community and in the prior art. Farnsworth suggested the use of aluminium for the anode wall because it emits electrons when exposed to intense ultraviolet radiation as is emitted by the ionization processes discussed above. The possibility of secondary electron emission from appropriate wall anode materials has been suggested in the IEC literature and discussion forums. IEC researchers have conducted preliminary tests with the axial cylindrical IEC research device and confirmed enhanced fusion rates. Such means may be incorporated into preferred embodiments of the present invention.

Croitoru U.S. Pat. No. 3,609,369 of Sept. 28, 1968 describes an improvement of the ion beam and solid target type of neutron generator in which the target is hollow in order to accommodate a sample that is to be irradiated by the generated neutrons. The hollow target is consequently elongated into a cylinder or polygonal cross-section tube within which the sample can be located at atmospheric pressure. The hermetically sealed neutron generator device is characterized by generation of a number of charged particle beams directed from a number of sources against the cylindrical target. The beams are arranged to be divergent inwardly so that there is overlap of the impinging ions in order to ensure substantially uniform radiation intensity. The device has a generally toroidal shape. The device was not conceived as a line source gas-plasma target neutron generator as described herein in connection with embodiments of the present invention.

Stelniceanu, French Pat. No. 2 379 136, Jan. 28, 1977 describes a spherical configuration electrostatic field defining set of electrodes. These are intended to bring charged particles into the centre of the spherical device in order to increase the fusion rate. The device utilizes an external ion source and radially aligned tubes wherein the electrostatic field accelerates the positive ions towards the inner, largely transparent electrode. An objective of the disclosed fusion reactor device is to avoid a linear fusion zone by concentrating the high energy atomic nuclei at a point.

Jassby et al, U.S. pat. No. 4,065,351, Dec. 27, 1977 describe a device for stacking counterstreaming ion beams in order to provide high intensity colliding beams of deuterium and tritium into a toroidal, net neutral target plasma column that is magnetically confined along an endless magnetic axis. The stacking is different from the stacking of cathode grid cells that is described in connection with embodiments of the present invention. The plasma target is confined by means of magnetic fields in a vessel of toroidal shape where the general particle movement is along the circular axis of the toroid.

Frentrop, U.S. pat. No. 3,546,512, Dec. 8, 1970 describes an improvement of the ion beam and solid target type of neutron generator. The possibility of continuous or pulsed operation is discussed. The regulation of the parameters in order to control the neutron generation rate is described briefly. The term "thermally responsive gas" is used in association with pressure regulation. Automated control possibilities are suggested. The methods of regulation are not directly applicable to the methods or control rules of embodiments of the present invention. The capability of pulsed mode operation of any electric neutron generator is an inherent feature.

Bell et al, U.S. Pat. No. 2,920,235, Jan. 5, 1960 describes a method for producing intense energetic gas discharges. The device relies on the establishment of arcs in a low pressure D or T gas and magnetic fields for the containment of the ions and electrons. Although the illustrated embodiments have a characteristic elongated shape, there is no suggestion of applicability to the application of a linear geometry source of particles.

Gibson et al. U.S. Pat. No. 3,085,173, April 9, 1963 describes an improvement to the magnetic toroid means of charged particle confinement. The generally toroid shaped hollow tube is formed of an alternate succession of relatively small and large tube portions connected end to end. There is therefore only a superficial similarity to a particular curvilinear form embodiment of the present invention that uses a particular type of electrostatic confinement.

Warnecke and Leboutet, U.S. Pat. No. 3,155,593, Nov. 3, 1964 (France, Feb. 2, 1959) describes a neutron generator in which the ions are formed into "chaplets" (a form somewhat like a string of beads, a garland or a wreath). These move as bunches axially along a straight evacuated vessel until reflected by an electrostatic field at each end. A confining magnetic field is imposed axially to mitigate divergence of the ions from the axis of the vessel. Many "chaplet" bunches move to and fro in order to increase the fusion collision rate. The combination of parameters including velocity modulation of ion beams is such that the bunches pass through each other at predetermined zones along the electrostatically neutral drift space portion of the device. These zones are the collision zones from which fusion neutrons are emitted. The device could therefore be described as a straight line source of neutrons emitted from predetermined fixed zones. The length of the line source is a function of the number of predetermined zones and their characteristic spacing. However Warnecke and Leboutet do not state this attribute of their invention. In any case, the means by which the straight line alignment of neutron emitting zones employs a different means for creating a single beam of ions is clearly different from that of embodiments of the present invention. The means of reflecting the ions back along the same track and the orientation of that track along the central axis of a substantially cylindrical vessel is also clearly different from that of embodiments of the present invention. The use of separate ion beams for dual species fuels is a further difference from embodiments of the present invention. The utilization of a confining magnetic field in the drift tube is another difference from embodiments of the present invention that may utilize local button magnetic fields as part of a secondary electron production means. The Warnecke embodiments do not teach that the device can be formed into a curvilinear shape as a single coherent device. The overall number of components is obviously much greater than in the case of embodiments of the present invention and the Warnecke device is therefore not able to achieve this advantage of embodiments of the present invention.

Culver, U.S. Pat. No. 3,996,473 Dec. 7, 1976 describes electrical means to achieve pulsed operation of ion beam solid target type sealed tube neutron generators. The means for achieving pulsed operation of embodiments of the present invention are considered to be prior art knowledge for one skilled in the art.

Bernadet, U.S. Pat. No. 5,215,703 of June 1, 1993, describes a high flux neutron generator tube in which solid targets are bombarded. A presence of a plurality of ion source targets influences the neutron output rate of the generator tube. An operational lifetime exceeding 1000 hours is contemplated. The disclosure considers features that are intended to extent the lifetime of the solid targets. The target is arranged cylindrically or around an ion source in an annular configuration. The disclosed embodiment relies on magnetic confinement of the ions.

### SUMMARY OF THE INVENTION

Miley & Sved, Applied Radiation and Isotopes, Vol. 53 (2000), No. 4-5, pp. 779-783 is starting point of the invention.

Embodiments of the present invention seek to provide apparatus for producing nuclear fusion reactions for a duration of thousands of hours to several years with little or no maintenance to a reactor chamber.

Embodiments of the present invention seek to provide apparatus for producing nuclear fusion reactions with little or no maintenance to a central electrode or an associated high voltage power input structure.

Embodiments of the present invention seek to provide apparatus for producing nuclear fusion reactions with little or no maintenance to an internally mounted reactor chamber gas storage and pressure regulation device.

Embodiments of the present invention seek to provide apparatus for producing nuclear fusion reaction rates with high stability as defined by a measurable neutron flux at conditions of specified voltage and current.

Embodiments of the present invention seek to provide apparatus for producing nuclear fusion reaction rates of high reproducibility in mass produced embodiments.

Embodiments of the present invention seek to provide apparatus for producing nuclear fusion reactions with a minimum or reduced amount of peripheral support equipment functions.

Embodiments of the present invention seek to provide apparatus for producing nuclear fusion reactions that is structurally robust for operation while mobile on ground vehicles.

Embodiments of the present invention seek to provide apparatus for containing nuclear fusion reactions to produce neutrons that can escape from a sealed apparatus in all directions from a zone of origin that is elongated and able to replace an elongated line source made of many discrete pellets of radioactive neutron emitting isotope such as californium 252 or discrete point sources like point source neutron generator apparatus.

Embodiments of the present invention seek to provide apparatus for producing nuclear fusion reactions in a zone whose length can be specified as multiples of a single cathode cage cell length.

Embodiments of the present invention seek to provide apparatus for producing nuclear fusion reaction neutrons in a curvilinear source configuration which can be conformal to curved linear forms of specified objects that are to be irradiated.

Embodiments of the present invention seek to provide apparatus for producing nuclear fusion reactions in an elongated zone or multiple zone segments in the case of a curvilinear geometry within a reactor vessel.

Embodiments of the present invention seek to provide apparatus for producing nuclear fusion reactions in a volume centred on a centreline axis or line of cylindrical symmetry of a reactor vessel.

Embodiments of the present invention seek to provide apparatus for producing nuclear fusion reactions in a volume or zone as defined above which extends from a centreline to an anode and includes an internal cathode and a space external to it for a radial distance of approximately one half of a radius of the cathode.

Embodiments of the present invention seek to provide apparatus for producing nuclear fusion reactions by utilization of characteristics of a so-called inertial electrostatic confinement (IEC) star mode of operation with ions initially produced by glow discharge break down of a reactant gas plus ion-impact and electron-impact processes in a plasma-gas mix and also a favourable production of secondary electrons of low energy which are well suited for further ion production after impact of high energy electrons on structures located at or near an anode wall.

Embodiments of the present invention seek to provide apparatus for producing nuclear fusion reactions by utilization of an ion capture phenomenon called "zone of acceptance", whereby a spatial region centred on each star beam and having a curved funnel-like shape with its broadest end at an anode wall defines a region where ions born with relatively low kinetic energy will be drawn into a local star beam.

Embodiments of the present invention seek to provide apparatus for producing nuclear fusion reactions by utilization of characteristics of a so-called star mode of operation where a cathode grid shape is adapted so that formation and shape characteristics of star mode beams and a zone of acceptance are controlled to maximize or at least improve the above described production and utilization of ions for fusion collisions.

Embodiments of the present invention seek to provide apparatus for producing nuclear fusion reactions with several reactant gas ionization enhancements which are compatible with a low maintenance and low cost system.

According to the present invention, there is provided a particle producing apparatus of the inertial electrostatic confinement type utilizing a star mode of a glow discharge induced ion and neutral gas mixture of fusible low atomic number isotope species to generate neutrons such that, during operation, the star mode beams of ions and high kinetic energy neutrals have a general direction of motion which is aligned substantially radially to a central axis of the vessel, wherein the apparatus is elongated to a line source of neutrons, the apparatus comprising a vessel of generally prismatic form having an inner surface and a central axis, within which vessel is disposed an elongate anode electrode structure surrounding an elongate cathode electrode structure having a perimeteral surface provided with apertures and the cathode structure is a compound structure comprising a plurality of unit cell portions stacked end to end in an elongate array therein, the anode and cathode structures being substantially concentric along at least a part of their lengths and substantially coaxial with the vessel.

Preferably, the apparatus is adapted to generate neutrons in a "macro" linear or curvilinear geometry, where the expression "macro" is used to distinguish between a relatively small "micro" sized neutron source geometry such as a single pellet of radioactive isotope and a "mega" sized neutron source such as a fission reactor core or a star. In other words, "macro" implies a size or scale that is useful for industrial applications. This may range from approximately 1cm line source length for envisaged medical neutron beam source applications to several metres for a land mine search or soil analysis application. The macro characteristic also implies that the macro scale device may be built from an ordered collection of micro sized units. This is the case in certain embodiments of the present invention which efficiently stack micro star beam cells into a linear arrangement which may consist of two or more cells, typically several tens of cells.

The vessel and/or cage-like cathode structure having a generally prismatic form may have a generally tubular form, and may have a substantially circular cross-section, a substantially elliptical cross-section, a substantially polygonal cross-section with substantially straight sides or convex or concave sides or any other appropriate cross-section such as compound curves or combinations of straight, convex and/or concave. The cross-sections of the vessel and the cathode structure may be similar to or different from each other.

Advantageously, the cathode structure has open faces on its circumference and is encircled by an anode and vessel wall structure. The cathode structure may comprise a plurality of cathodes stacked prism end to prism end with generally identical electrode set structures to establish an elongated array that in star mode operation will establish a stable plasma gas dynamic structure within whose star mode beams of generally radially oscillating ions there will occur a high probability of nuclear fusion reactions whose escaping neutrons will appear to originate from a zone defined by an internal volume space of the anode electrode and the inner surface or wall of the vessel.

The cathode grid electrode may be constructed from sheet or plate metal of suitable metallurgical characteristics and be as thin as practicable for structural robustness. In a compound cathode structure formed from a plurality of cathodes stacked end-to-end, a single cell may be defined by two generally circular disks of diameter D1 which are separated by a set of spacers with length L1. Preferably, the spacers divide a circumference of the cathode structure into an even number of substantially equally dimensioned holes or windows through which the star mode beams will be substantially centrally aligned when the apparatus is operating in the star mode.

The holes or windows of the cathode grid in conjunction with the anode wall may serve to determine planes of equal electrostatic potential. A lens effect may be produced with the superposition of a charge space of the ions and electrons when the apparatus is operating in the star mode. An electrostatic lens shape can be altered by changing the anode and the cathode geometries, for example by incorporating:
a) Substantially concentric circles for the cathode and anode.
b) A regular even number of sides of polygonal form for the anode inside wall and a corresponding number of windows on the cathode with the circumference of the window sides being generally:
   1. convex
   2. flat
   3. concave
   4. compound combinations of the above three
   and each with radii of curvature and lengths of circular arc segments defined for repeated usage throughout a stack of cathode grid cells so that the star beams that are formed will be optimized or suited for secondary electron production at the anode and mitigation of ion collision with the cathode grid electrode.

The anode wall may be treated by passive means to promote production of multiple emissions of relatively low energy electrons that will most easily ionize reactant gas species isotopes when a surface of the anode wall is hit by a relatively high energy electron that has been accelerated by an applied electrostatic field that is present during star mode glow discharge ionization operation. Such passive means may include coating a substrate metal with rare earth elements or other elements with beneficial properties and/or by imposing a surface finish that has a texture or micro geometry to promote generation of secondary electrons.

The apparatus may be adapted such that ions born or generated within a zone of acceptance between the anode wall and the perimeter of the cathode grid will be drawn into the star mode beam around which the zone of acceptance is substanitally centred and which has cathode hole window side segment curvatures which are suited to a shape of planes of equipotential in the electrostatic field to increase a size of the zone of acceptance and thereby capture most or substantially all ions produced by interactions of neutrals with secondary electrons near the anode wall.

A failure mode of any metal coating of insulating surfaces may be mitigated by providing for a generally radial trajectory of both ionized and neutral particles of gas atoms, molecules and metallic particles so that migration of metal atoms towards either end of the electrode stack where non-electrically conductive electrode support structures are located is prevented or at least reduced.

Advantageously, the reactor vessel is hermetically sealed and a pressure regulation device is incorporated within the sealed vessel. An appropriate pressure regulation device is a conditioned chemical getter pump of appropriate characteristics that may be installed so that upon heating it will cause loaded isotopes of hydrogen to diffuse out and reach an equilibrium partial pressure in the sealed and previously evacuated and out-gassed vessel chamber corresponding to a getter material pressure and a diffusion loaded density of hydrogen isotopes in a getter material.

The chemical getter pump may be configured effectively to capture contaminant chemical species other than noble gases which may include residue from a vessel chamber cleaning process plus species releases from surfaces because of the conditions of normal star mode operation. The getter pump may therefore enhance a consistency of a fusion rate by continuously collecting contaminants that would otherwise rob energy from the star mode plasma-gas structure.

Alternatively, the vessel is not hermetically sealed, in which case auxiliary vacuum pumping and gas dosage equipment will need to be provided. This equipment will generally be more expensive that the getter pump described above.

The anode and vessel walls may comprise a combined functional element and may incorporate external fins or other heat transfer structures or surfaces for heat transfer by means of flow of a heat transfer fluid, generally a cooling fluid, over the fins or other structures or surfaces.

The anode, secondary electron production means, vessel wall and external heat transfer fins or the like may be integrated into a cross-sectional form that is suited for manufacture by an extrusion process, especially an aluminium extrusion process, in order to manufacture a reduced cost component of the apparatus.

A straight line configuration of the apparatus may be fabricated as segments that can be arranged into curvilinear shapes which may be generally conformal to target objects that are to be more uniformly irradiated by neutrons produced by the apparatus.

The cathode grid components may be constructed as short straight segments of a length compatible with short segments of the vessel wall and held together by spindle structures that are similar to end spindles of the cathode structure but fabricated with appropriate angles to enable electrical and structural interconnection of the cathode grid segments so that they may be placed on a local central axis of each straight segment.

The materials from which the vessel wall, the cathode structure and/or the anode structure are made may have a significant effect of the performance of embodiments of the present invention. It has been found that aluminium is a good material, since it may be extruded to form complex compound structures and is a good source of relatively low energy secondary electrons when bombarded with relatively high energy electrons accelerated from the cathode towards the anode and the vessel wall. In a particularly preferred embodiment, the vessel wall may be made of aluminium provided with an inner coating or surface texture that enhances secondary electron emission. Alternatively or in addition, an inner coating or liner made of stainless steel has been found to be suitable. In a particularly preferred embodiment, the vessel wall is made of aluminium alloy in order to utilize the relatively high thermal conductivity and electron emission characteristics of this material. Other options which are considered to be practical for milling from solid form or for welded fabrication include stainless steel and copper.

Advantageously, at least the vessel wall and optionally the anode structure are formed from or coated with a material, generally a metallic material that acts as a good source of secondary electrons as defined above. Suitable coating materials include metals able to withstand high temperatures, such as molybdenum, tungsten and suitable rare earth elements.

The inner surface of the vessel may be roughened or formed with discontinuities, including grooves or channels, that promote generation of secondary electrons. This can enhance an electron multiplier or cascade effect that can generate more ions in the vessel and thus improve fusion rates.

It is important to appreciate that embodiments of the present invention do not require longitudinal transparency along the axis of the cathode structure, and that solid bulkheads and the like may be provided. This is because particle acceleration is generally radial relative to the axis of the cathode structure as opposed to parallel relative thereto as is the case in much of the prior art.

It is also believed that a diametric symmetry of the apertures in the perimetral surface of the cathode structure is important for efficient operation of embodiments of the present invention.

A particular advantage of embodiments of the present invention is that neutron output can be made extremely consistent, which means that it is relatively easy to remove extraneous noise effects in practical applications of the invention by an appropriate noise subtraction process.

Embodiments of the present invention may be used in boron neutron capture therapy for treatment of cancer and the like in human or animal subjects.

Embodiments of the present invention are additionally well-suited for use in hazardous conditions, for example underground in mining applications where they may be used for mineral analysis. This is because hardly any radioactive material is incorporated into embodiments of the present application (in contrast, say, to Cf252 isotope sources), the apparatus may be switched off instantly to stop neutron generation, the apparatus may be cooled by way of air or other heat transfer fluids and has a very small explosion risk in underground applications, and there is little or no coincident gamma emission.

The present invention utilizes the nuclear fusion potential of plasma gas interactions that have been observed to occur in spherical radial and cylindrical axial inertial electrostatic confinement (IEC) type devices which rely on a simple glow discharge for initial ion production. Embodiments of the present invention provide a novel stacked electrode configuration that results in a macro linear geometry neutron source. Embodiments of the present invention may satisfy industrial requirements for a neutron generator that has a lifetime measured in years and constant reproducible neutron output performance. Embodiments of the invention may have a versatile linear or curvilinear elongated neutron source zone geometry so that only one system unit need be used in a practical neutron dependant interrogation system. In accordance with the broader aspects of this invention, there is provided an apparatus (sometimes referred to as a fusor or inertial electrostatic confinement) comprising a cathode and anode electrode set for generating fusion reactions that occur mostly within a set of enhanced ion density planar radial beams that are defined by an electrode set electrostatic potential field and a space charge of a gas and plasma mix. A series of generally cylindrical form cage cathode electrodes may be mounted end to end so as to form a straight linear or curvilinear stack along a common centreline axis. Each cathode electrode cell may have an open grid circular circumference that is permeable to gas and plasma particle flow and closed or solid circular end faces. The open grid circumference may be defined by equally spaced longitudinal structural elements of wire or vanes that connect the cylinder ends and establish diametrically opposed hole pairs. The number of longitudinal vanes may be set to make the holes approximately square or rectangular in form and also to retain a geometric radial transparency greater than approximately 85%. The linear stack of cylindrical cathode grid electrodes is contained within a cylindrical or polygonal anode structure that may also serve as a vacuum vessel wall. The generally cylindrical and coaxial cross section of this cathode and anode structure may be distorted from circular such that the star mode spokes or beams will have different lengths. The macro form of the linear source of neutrons as viewed from a distance of about five times the characteristic vacuum vessel or anode diameter may be a non-resolved summation of many mini fusion zones that are produced in each micro-channel star beam. These beams may be established along diametric paths that are the longest and through the cathode grid hole pairs that are the largest. Therefore symmetry and uniformity are advantageous when seeking to increase the number of mini fusion zones. However, asymmetric configurations may be established by design if needed for specific neutron source geometry and collimator configurations. Means are provided for applying a many tens of kilovolt potential to the cathode and anode for establishing an electrostatic field between them. Initial ionization may be provided by the glow discharge mechanism of neutral gas ionization. Thereafter, several methods of secondary electron production known to one skilled in the art may be employed to enhance the production of ions. The gas generally consists of fusible isotopes at a low pressure suitable for glow discharge to be induced. The low pressure is compatible with a chemical getter pump that may have the characteristic of producing a constant partial pressure of hydrogen isotope for a constant temperature of the getter material. The getter pump may serves as a gas storage and pressure regulator in a hermetically closed chamber and is useful in a practical industrial embodiment of the invention. The getter temperature may be controlled by automated means to maintain a target voltage across the electrodes as determined by a gas-plasma pressure. The high voltage power supply preferably has current regulation means that may be employed to establish near-constant electrical power input to the IEC device. This yields a corresponding stable fusion rate. Longevity of the reactor chamber assembly may be provided through the avoidance of completely metal-coated internal insulator surfaces. This relies on utilization of micro-channel beam distribution to mitigate metal vapour migration to feed through and standoff insulator surfaces. The dimensions of the cathode may be such that radiant heat is effectively transferred to the anode chamber wall and then further transferred to the external cooling means. This ensures that the operating temperature of the cathode grid remains low enough effectively to mitigate significant metal vapour pressure.

A fusion collision zone generally occupies both a spatial region within a central grid cathode electrode with high radial transparency and external to it within the hermetically sealed reactor vessel. The central electrode and auxiliary ionization enhancement devices may be configured to define an approximate cylindrically symmetric electrostatic field for the maintenance of a stable neutral gas and ionized plasma mixture. At the gas pressure required for glow discharge when the high voltage is applied, the cathode grid may induce electrostatic lenses that effectively mitigate higher energy ion impact with the cathode. The high energy ions collide mostly with neutral gas to yield nuclear fusion reactions along the star beam like trajectories diametrically through the cathode grid holes with little or virtually no erosion of the electrode or other internal components. Stacking the cylindrical cathode grid sections end to end permits a complete plasma gas target length to be defined as multiples of the cathode grid cell sections. A neutron emission zone will normally not be resolved to distinguish the individual star segments and the individual radial star beams. The mechanical robustness, lack of delicate or limited operational endurance components, slow erosion electrode, self contained gas pressure and contaminant management getter pump device and reduced need for external support sub-systems provide cost effective long operational life for industrial applications. In addition to providing a straight line source of neutrons, embodiments of the present invention may be provided as a curvilinear cylindrical vessel in which the cathode grid stack and anode vessel wall are segmented to conform generally to a perimeter of an object that is to be irradiated by the emitted neutrons.

### BRIEF DESCRIPTION OF THE DRAWINGS

For a better understanding of the present invention and to show how it may be carried into effect, reference shall now be made by way of example to the accompanying drawings, in which:
FIGURE 1 shows a schematic of a single cathode grid and vessel wall anode cell;
FIGURE 2 shows a cross section of cathode grid and anode cell with star mode micro channel beam;
FIGURE 3 shows a cross section of cathode grid and anode cell with examples of optional hole edge and anode wall shapes;
FIGURE 4 shows a distribution of local fusion rate intensity along a star mode micro channel beam;
FIGURE 5 shows an arrangement of radial mini fusion zones to emulate a homogeneous line source of neutrons when viewed from a distance;
FIGURE 6 shows an arrangement of cylindrical cathode grid cells to yield a neutron generator line source;
FIGURE 7 shows a schematic of a linear geometry reaction chamber preferred embodiment;
FIGURE 8 shows a schematic of a vessel wall and integrated cooling fins, anode, ionization enhancement geometry and aluminium material for high secondary electron emission;
FIGURE 9 shows a schematic of preferred embodiment system functions (line source); and
FIGURE 10 shows a schematic of an alternative preferred embodiment (curved line source).

### DETAILED DESCRIPTION OF THE PREFERRED EMBODIMENTS

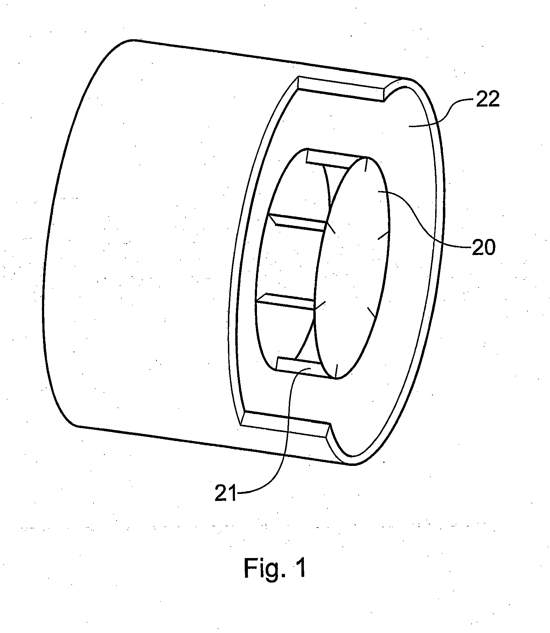

The present invention makes use of a non-magnetic method for the confinement of ionized fusion gases in an electrostatic field determined by a cathode electrode diagrammatically illustrated in FIG. 1. The generalised electrode structure consists of two disks **20** of diameter **d1** and a thickness **t1** sufficient for structural rigidity in currently envisaged applications. The disks **20** are connected by vanes **21.** The vanes **21** are positioned around the circumference of the disks **20** so as to define sectors with equal arc lengths such that a mirror symmetry will be established. A practical least number of vanes **20** per electrode cell is four (although in some embodiments, more or fewer vanes may be provided). This gives four holes consisting of two hole pairs. A further configuration in an infinite series is six vanes **21** as shown in FIG 1. Every even number of vanes is allowable depending only on the general cell diameter and practicality of greater numbers of vanes **21.** A limiting constraint is that the radial geometric transparency of the electrode cell should be greater than approximately 85%. The parameter that influences this constraint is the thickness **t2** of the vanes **21.** More vanes **21** may be installed as **t2** is reduced.

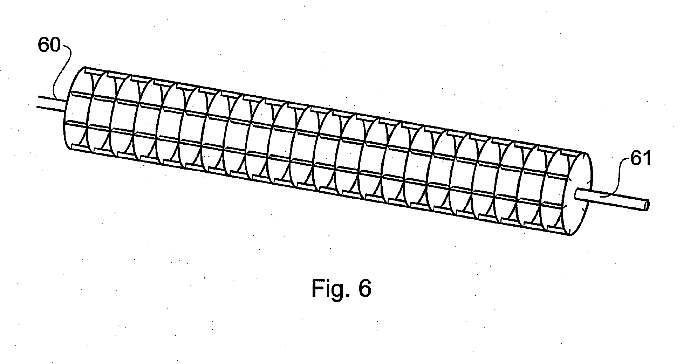

The cathode grid electrode is centrally or coaxially positioned within an anode **22** of cylindrical form which may also serve as a vessel wall. The electrode cell in FIG. 1 may be combined with any number of identical cells to make an elongated electrode assembly as shown in FIG. 6. This assembly may share disks **20.** In practice it would be constructed so that the vanes **21** are made from one piece of material along the full length of the stack of cells.

The disks **20** may be solid as illustrated or they may be of an annular form. In the annular form, a central hole has a diameter **d2** that is determined to retain a ring thickness which is defined as half of **d1** minus **d2** so that it is the same as or greater than a radial depth **r1** of the longitudinal vanes **21.** The annular form is not essential for the desired operation of the present invention. In any event, the disks **20** at each end of the stack of cells are preferably substantially solid so that supporting spindles **60** and **61** can be mounted. The spindles **60, 61** are illustrated diagrammatically in FIG. 6. Suppression of unwanted axial or near axial star mode beams is achieved when the end disks **20** have no holes.

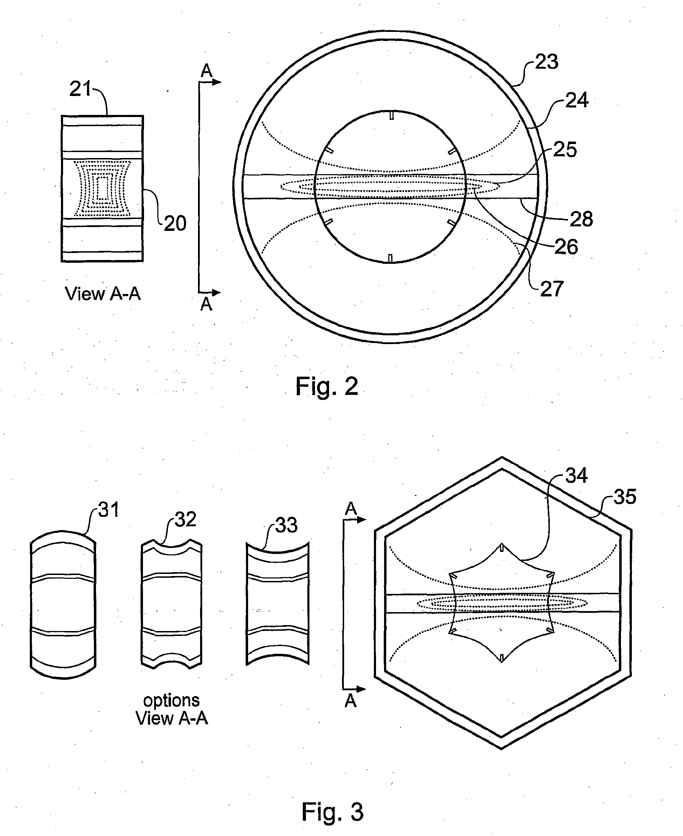

The cylindrical virtual surface that is described between the outer edges of the disks **20** is permeable to ions, electrons and neutral gas. The longitudinal vanes **21** divide the virtual surface into segments. Each segment is bounded by the electrically conductive structure of the cathode grid and acts as an electrostatic lens by virtue of the departure from the ideal cylindrical electrostatic potential of the cylindrical electrode. The planes of equal electrostatic potential are deflected slightly inward towards the central axis of the cylindrical electrode. This can be visualized as dimples in the cylindrical surface. These dimples are centred in each hole that is defined by the perimeter created by the intersection of vanes **21** and disks **20.** FIG 2 View AA shows how the lines of equal electrostatic potential might appear. Another analogue for descriptive purposes is the distortion that an elastic membrane would experience if was to be stretched tightly over the surface of the grid. The distorted electrostatic field has the effect of changing the trajectories of the ions and the electrons that pass through it. The net effect is that of focusing the mostly radial trajectories into the beams or spokes or micro-channels.

The curvature of the segments of the disks **20** and vanes **21** may differ in order to alter the electrostatic "optical" characteristics of the holes in the cylindrical grid. The radius of the curve segments of disks **20** is co-centric with the central axis of the grid. However, it can be changed to either a smaller radius or a larger radius as long as the arc so defined intersects the crossing with a vane in the same position as defined by the nominal radius of the cylindrical grid. Similarly, the straight vanes **21** may be curved to be convex or concave. This is shown in FIG. 3 for illustrative purposes. Changing the electrostatic optical characteristics of the grid holes can be advantageous as a means of compensation and optimization of the IEC star mode environment. In particular, the star mode beam shape can be adjusted to define a desired beam core cross section and zone of acceptance **27** of ions into the beam. The core and zone of acceptance **27** area of influence at the anode wall **24** can also be controlled by the selection of the grid hole side segment radii of curvature. In FIG. 3 illustrative examples show convex longitudinal segments **31,** compound curvature longitudinal segments **32** and concave longitudinal segments **33.** The circumference of the disks **20** can also be shaped to be convex, compound or concave **34** as shown in FIG. 3 for illustrative purposes. It is also feasible to alter the curvature of the anode wall **35.** For example a polygonal shape which has as many side segments as the cathode can be used to gain additional ionization advantage when used with some of the prior art secondary ion production devices. The polygon segments would offer flat surfaces that can simplify the mounting of auxiliary ionization devices (not shown) on the inside wall of the vessel.

The appearance of a micro-channel beam is depicted at **25** and **26** for illustrative purposes in FIG. 2. The actual visual appearance as seen via a colour video camera reveals that the greatest light intensity comes from the central axial core of each micro-channel beam **25** and **26.** This is an indication that there is a concentration of ions, electrons and charge exchange processes between the particles. It is at its greatest where the electrostatic field focusing has been most effective. The correlation of the electrostatic lens shape defined by the hole pair in the cathode grid has been observed as heat marks or contaminate deposits on the anode wall **24** in some experiments. These marks have a shape that corresponds to the shape of the grid holes. In some cases the density of heat mark or contaminant discoloration also corresponds to the core intensity and gradual reduction away from the core of a micro-channel beam **25, 26.** The particles that reach the anode wall **24** are those that have some significant radial velocity. They are mostly neutral non-negative charged atoms that have not been decelerated by the electrostatic field. Figure 2 additionally shows how the anode wall **24** may be formed on an internal surface of a vessel wall **23** within which the present invention is contained.

The cathode emits electrons. The electrons will be attracted by the anode and generally move towards the anode in radial paths. The density of gas molecules, atoms and ions at the 10⁻²mbar operating pressure range is sufficiently high that the mean free path of any electron will be relatively short. Therefore the free path limiting interaction will be a collision where some form of energy exchange and ionization will occur. The ionization of the gas occurs as dielectric breakdown. It becomes a conductor. The positive ions move towards the cathode but the mean free path length is relatively short. Much IEC research has concentrated on the extension of path length so that an ion will have multiple passes through the transparent cathode grid. The occurrence of multiple passes is in doubt at the operating pressure range that is necessary for glow discharge for embodiments of the present invention. Charge exchange by the ions is ranked as a major collisional loss factor. Ions become fast neutrals and move to the vessel wall **23** because the collision cross-section of the neutral is much smaller than for the charged particles. New ions resulting from charge exchange collisions will have a lower energy and, depending on their birth location, will be accelerated to higher velocity. Charge exchange limits the population of very high energy ions that are needed for fusion reaction collisions.

An obvious approach to reducing glow-discharge collision losses is to reduce the system pressure. However, there is a coupling of system glow discharge pressure, voltage demand across the cathode-anode and the reaction chamber dimensions. A study of various data sets has allowed a relationship to be established as a design guideline. A glow discharge voltage scaling law for all transparent cathode grid geometries of V[kV] = 1.06 (P[Torr] d[cm])^{-1.44} has been offered by an IEC researcher. The relationship indicates the voltage that will be demanded by a deuterium glow discharge in a system with cathode to anode distance d. The validity is not assured but the observations of the present applicant are in reasonable agreement. The assertion that the scaling law is true for all transparent cathode grid geometries is not supported. As noted above, embodiments of the present invention provide a means of altering the star mode beam shape which can contribute to ion production and hence alter the bulk plasma conductivity characteristics. Such means are described below. However, the measurement of the kilovolt voltage and the millibar pressure do present problems of measurement precision so that an absolute understanding is an academic goal rather than a practical problem for implementation of an embodiment of the present invention. The example dimensions and operating parameters of the preferred embodiments will be discussed below. The practical monitoring and control of the high voltage and the current will be described below.

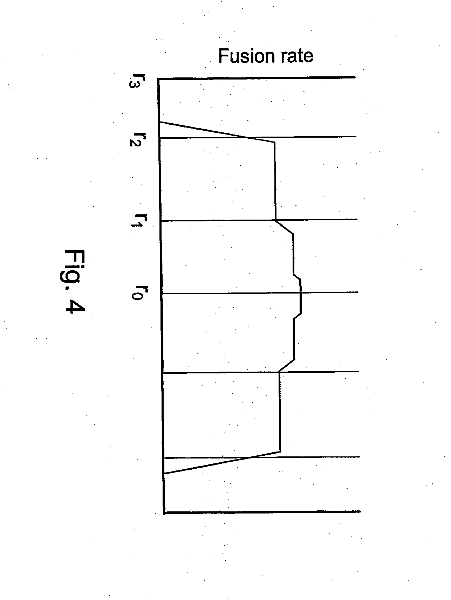

The collisional losses lead to the expectation that charge exchange collisions can occur anywhere in the IEC star mode environment but in particular in the beam channels. The pressure is such that fusion collisions can also occur in regions other than the intensely focused core of spherical or cylindrical IEC configurations. This non-core distribution of neutron origin or source diameter has been observed. FIG. 4 shows an illustration of a local neutron generating fusion reaction rate distribution along a typical star mode beam. Radius **r₀** is the centre of a substantially symmetric IEC configuration. Radius **r₁** is the radius of a circular cathode grid or mean radius of a cathode grid of more complex shape as described above. Radius **r₂** is an approximate location where fusion reaction rates abruptly undergo transition. Radius **r₃** is the nominal position of the anode. Details of the vessel wall and anode surface structure are discussed below. The neutron generation or fusion rate profile is a set of plateaus, The inner plateaus are higher due to the focusing of several beams in the centre.

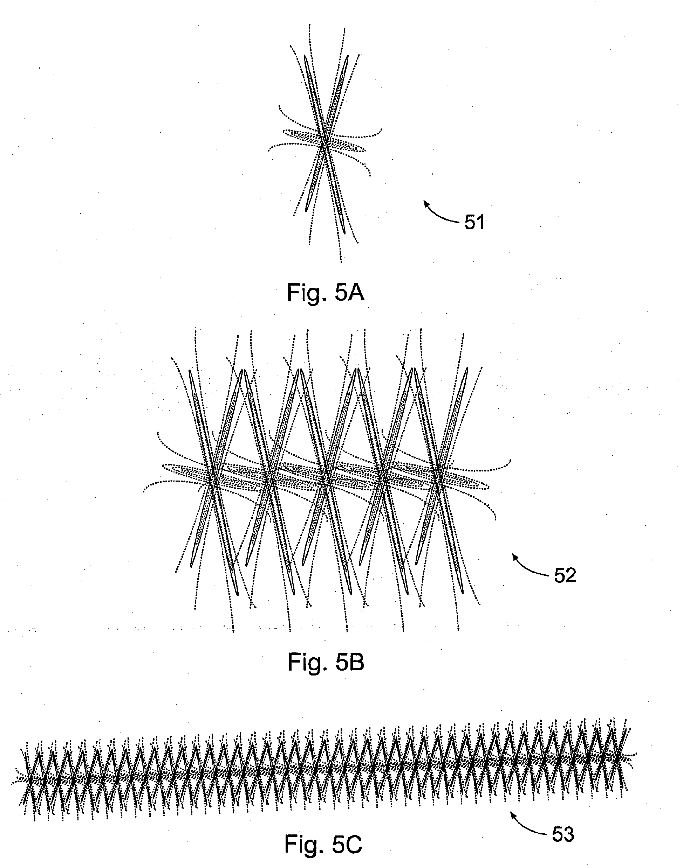

When a full set of star mode beams per cylindrical grid cell is viewed the appearance is somewhat like the structure **51** in the illustrative diagram of FIG. 5A. Combining these grid cells yields a structure **52** illustrated in FIG. 5B. Further addition to the stack yields the structure of neutron sources structure **53** shown in FIG. 5C. The spacing between cell centres and the corresponding star beams is determined by the width of a grid cell. Example dimensions are given for a preferred embodiment. Typically, a spacing of approximately 2cm may be practical. Therefore there would need to be five cells stacked to make a total grid length of 10cm. A long line source of neutrons that is requested for conveyor belt on-line analyser systems is approximately 40cm. This would require twenty grid cells. The resolution of such a line source of neutrons by instruments such as a gamma scintillation detector will not reveal the discontinuous structure of the individual lines of neutron producing beams. In neutron radiography applications, a collimator would be used in conjunction with the present invention in order to reduce unwanted neutron emissions in directions that would lead to secondary emissions. The forward directed mono-energy neutrons may be passed through a moderator to reduce their energy. In such applications the discrete structure of the neutron source will not be apparent. It is plausible that certain material crystalline structure investigations with neutrons may be sensitive to ripples of the neutron flux in embodiments of the present invention. However, this would be a practical limitation to the utilization of embodiments of the present invention which would not detract from their objectives.

FIG 6 shows an illustration of the cylindrical form cathode electrode of an embodiment of the present line source neutron generator invention. The individual grid cells are stacked to produce a cathode of the desired length. At each end there is a spindle structure **60, 61** which serves as support attachment and as the electrical conductor attachment. The electrical conductor attachment end should have a means of secure electrical bonding such as a thread (not shown) for positive connection to the conductor of the high voltage high vacuum feed through assembly (not shown).

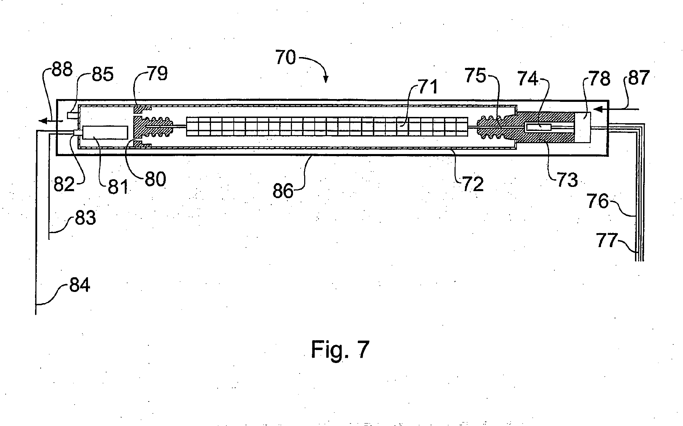

FIG 7 illustrates a linear geometry reactor chamber assembly **70** of an embodiment of the present invention. The details of the ionization enhancement means are not shown for clarity. The linear cathode grid sub-assembly **71** is coaxially located within a cylindrical or polygonal form vessel **72.** The vessel **72** is hermetically sealed by a high voltage vacuum feed through sub-assembly consisting of an insulator ceramic body **73** that is brazed to the vessel **72.** The electrical conductor sub-assembly **74** is similarly brazed to the insulator **73.** Other holes in the vessel wall such as **82** and **85** are also sealed by means that are well known. The cathode grid **71** is suspended between the high voltage feed through conductor **74** and the support insulator **79.** The grid assembly is attached to the feed through electrical conductor by means **75** that assure good electrical contact such as a threaded interface. There is provision in the support insulator **79** for thermal expansion of the cathode grid assembly **71.** The support insulator **79** is provided with breather holes **80** so that the reactant gas may freely move to equalize pressure in the main part of the vessel and the part that surrounds a "getter pump" assembly **81.** The getter pump assembly **81** provides a support structure for a getter material and a heater element. The temperature measurement thermocouple wires **83** and the heater element wires **84** come out of the vessel via a hermetically sealed feed through assembly **82.** The getter pump assembly **81** is loaded with reactant gas via the fill and empty port **85** which is configured to attach to conventional vacuum equipment. High voltage power is delivered to the reaction chamber by means of suitable high voltage coaxial shielded cable **76.** The shield **77** is attached to the chamber so as to provide a reliable return path of the electrical circuit. The cable conductor **76** will be at the operating voltage while the anode plus exterior reaction chamber will be grounded and at earth potential. The high voltage cable is secured to the reactor structure at the stress relief attachment **78** that also is configured to provide a grounded electrical connection to the reaction chamber wall.

The illustrated embodiment of the present invention can operate at voltages in the range of 30 to 120kV. Operating current can range from approximately 0.05mA to 10A if the power supply can deliver such power levels. Typically, several kilowatts may be drawn continuously. Dissipation of the thermal energy is via radiative cooling of the grid assembly **71.** The chamber wall **72** traps the thermal radiation but it is conducted through and may then be further dissipated by an external cooling sub-system. A flow of air at room temperature can be effective. Efficiency of heat transfer is improved through the use of cooling fins (not shown). An alternative method of cooling is by means of a liquid coolant that is circulated through a closely coupled pipe jacket (not shown) mounted on the exterior wall of the vessel **72.** The greater efficiency of heat transfer can be utilized effectively in systems of the present invention that have power input specifications approaching 10kW.

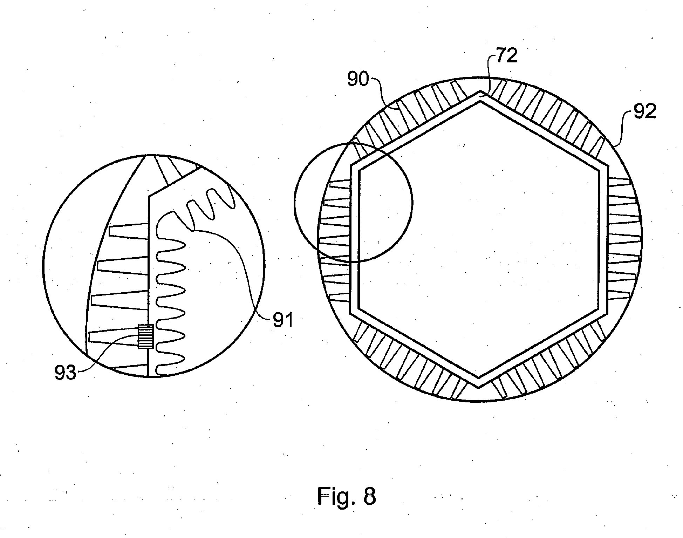

FIG. 8 illustrates an integrated vessel wall and heat transfer component that provides the advantage of reduced manufacturing cost. The component is produced as an extrusion of aluminium alloy by well known means. The vessel wall and anode **72** is changed from a cylindrical tube form to a six sided polygonal form. The exterior has integraged cooling fins **90** that are sized to fit within a cylindrical housing **92.** The housing **92** serves as a cowling or duct for a coolant fluid (such as air) so that heat transfer from the fins **90** to the fluid flowing past can be facilitated. It is feasible to use a liquid coolant for transfer of greater heat flux. It is also feasible to use liquid coolant such as water circulated in a tubing system that is brazed to the vessel wall **72.** The liquid coolant can be the subject for neutron interrogation as may be developed for Prompt Gamma Neutron Activation Analysis of bore hole slurry to monitor mineral content.

The detailed insert view of FIG 8 shows for illustrative purposes the surface of the inside wall of the vessel and anode **72.** As discussed above there are well known phenomena that can be exploited in order to increase the production of low energy electrons. The use of aluminium is advantageous because it produces electrons from its surface when exposed to strong ultraviolet radiation. The ionization of the reactant gas species provides a high intensity flux of UV photons which will meet the vessel **wall 72.** The incidence of high energy electrons which have been accelerated by the intense electrostatic field of the present invention will cause the emission of secondary electrons of low energy. These low energy electrons are well suited for ionization of hydrogen isotopes. The population of ions near the anode **72** will be greatly increased. These ions will be born within the "zone of acceptance" **27** and will follow trajectories that enter the star mode beam **26.** To ensure an increase of the low angle of incidence of the high energy electrons that stream toward the anode in the local radial direction, the surface is shaped as shown with paraboloid curvature **91.** The height of the peaks must be low in order to keep them within the electrostatic field potential zone where the greatest ionization efficiency can be achieved. The width of the ridges **91** must also be low in order to fit as many as possible into the available area. The design considerations will be influenced by the cost of manufacture and the quality of the extruded aluminium section. The positional accuracy is not required to be high because the star mode beams **28** and zone of acceptance **27** are broad structures that do not dictate precise targeting and alignment during assembly.

If the vessel wall and anode structure **72** is based on a cylindrical tube section, it is also acceptable to make the ionization enhancement ridges **91** as a screw thread cut into the inside wall surface. These will run in a circumferential direction rather than a longitudinal direction as in the case of an extruded form.

A further enhancement of secondary electron utilization for ion production is enabled by the imposition of a local magnetic field such that the secondary electrons will be mostly vectored to trajectories that retain them near to the anode wall **72.** Such trajectories will typically be of a spiral character as the electron trajectory is deflected by its passage through the magnetic field lines. The magnetic field can be produced by permanent magnets **93** positioned on the outside of the vessel wall such that it sits as near as possible to the star beam **28** intersection with the anode wall **24.**

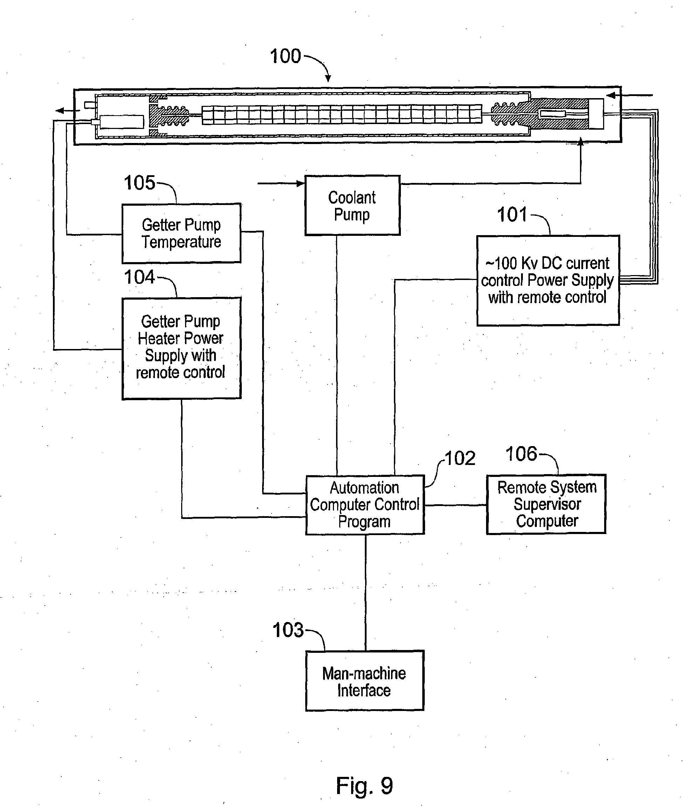

FIG 9 illustrates a system function schematic. Embodiments of the present invention require the peripheral functions to be interfaced therewith for effective operation. The most important peripheral is a very high voltage power supply **101.** An industrial embodiment preferably includes the capability to monitor and control the power supply remotely by means of automation technology that is well known to one of ordinarily skill in the art. The automation technology may ultimately be driven by a software program **102** that oversees the safety interlocks, start-up and shut-down sequence, normal steady state operating parameters and management of minor and major anomalies. The specification of such a software program **102** and its modular algorithms is beyond the scope of the present application. However it is noted that the applicant in respect of the present application has already developed such monitoring and control software which is now a mature peripheral sub-system for the present invention. The software host computer system supports the mandatory man-machine interface **103** through which a human operator of the present invention can select and observe a display of certain key parameters. The operator can also input certain control parameters and command the neutron generator system to start the warm-up mode, start the neutron generation mode, stop or go to stand-by from the neutron generation mode, resume the neutron generation mode, change to pulse mode, change to continuous mode and finally initiate total shut-down the system.

The other sub-system that is included within the reactor chamber configuration **100** in FIG. 9 is the getter pump assembly **81.** This is supported by a power supply **104** and a temperature measurement circuit **105.** The power supply **104** provides voltage and current that is sufficient to power a heater element that is embedded within the getter pump getter material. The heater raises the getter material to a temperature in the range of 400°C to 600°C. The heater is controlled so that the getter material remains at a steady temperature. The vessel 72 must be sealed and evacuated after it has been correctly baked out to eliminate residual volatile substances such as water. A conditioned getter of the appropriate material will release hydrogen or isotopes thereof so that a partial pressure will rise to the level of 5 x 10⁻³mbar to 5 x 10⁻²mbar when it is in the above mentioned temperature range. At a particular steady temperature the partial pressure will also be steady. The getter pump at constant pressure serves as a pressure source and a pressure regulator of high precision. It has been observed that very minor pressure fluctuations can cause significant departures of the star mode glow discharge voltage. The regulation of pressure can be fine enough with open bleed valve and turbo molecular vacuum pump configurations but the getter pump provides a superior means of pressurization of the sealed configuration IEC device.

The capacity of the getter pump **81** to store the reactant gas (deuterium D₂ or tritium T₂ or DT molecules) is a factor in determining the maximum number of operation hours of a sealed reactor chamber. A practical configuration allows ten years of continuous consumption of D₂ at the rate of 10⁸ fusions per second. During such a period, the output of the sealed reactor can be expected to change very slowly as the mixture ratio of reactants changes. In the DD fusion reaction, tritium and helium-3 will be generated as well as protons (hydrogen). The helium-3 and tritium will either be accumulated or consumed in the applicable fusion reaction. The contribution of these side reactions will in fact be negligible. It is feasible to perform maintenance on a sealed chamber by opening the fill and vent port, extracting the gas by heating the getter pump and baking the chamber to induce outgassing of the imbedded volatile species in the chamber inner wall **35.** The handling of tritium is subject to safety regulations. However the amounts of tritium that will accumulate in a well used DD reactor embodying the present invention are calculated to be below the lowest safety threshold in most countries.

For the purposes of the present application, it is sufficient to say that the software **102** controls the glow discharge voltage that the high voltage power supply **101** must deliver. The voltage is determined by the gas pressure in the chamber **100.** The gas pressure is determined by the getter pump temperature which is measured and sent to the software by a temperature measurement circuit **105.** The software **102** commands the getter pump heater power supply to deliver more or less power in order to maintain the getter pump temperature. The software is designed to take user commands from the man-machine interface device **103.** Command or control signals are issued to the necessary sub-systems so that the reactor operates at or very near to the parameters required for the user selected operating mode. The control algorithm **102** is not trivial due to several non linear characteristics; however, the response time is sufficiently long that a typical PC computer can easily cope with the cyclic monitor and control tasks. The net result is that steady neutron production rates are achieved. The rapid pulsing of neutron production from zero to full to zero may be implemented either by appropriate pulsing of the high voltage or pulsing of the current from the high voltage power supply **101**. Similarly, the neutron output rate can be modulated to any cyclic pattern. The steady state continuous or maximum pulsed output can be predetermined by setting the desired voltage and current. Usually the voltage is set to a near maximum point for greatest efficiency and the current from the high voltage power supply **101** is modulated.

A further feature of an industrial embodiment of the present invention system is the capability to interface with a remote computer **106**. This is necessary when the neutron generator is a sub-system within a neutron applications system.

Example of preferred embodiment characteristic dimensions:

| | |
|---|---|
| Inside diameter of the anode and vessel wall | 8cm |
| Diameter of the cathode grid electrode | 3.5cm |
| Length of the cathode grid electrode | 40cm |
| Length of the neutron line source | 40cm |
| Diameter of the neutron line source | 7cm |
| Overall length of the reactor chamber | 100cm |

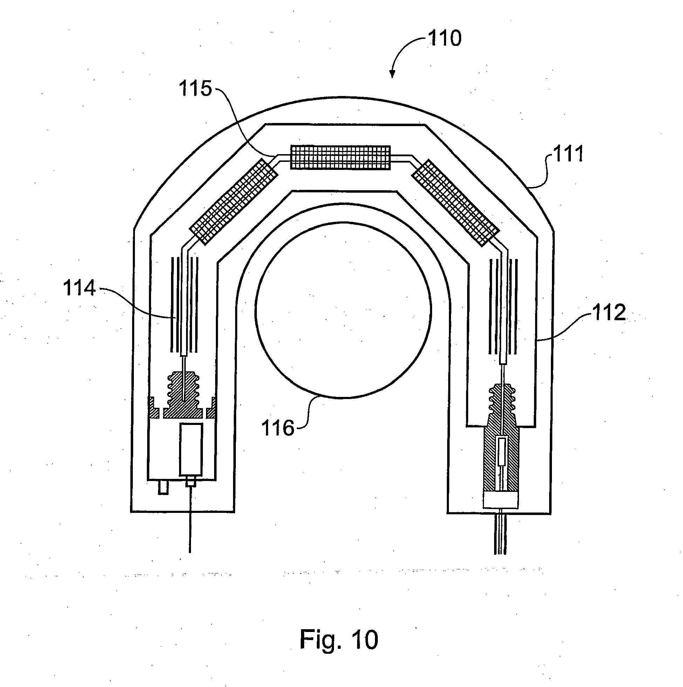

A second preferred embodiment of the present invention is shown in the illustrative diagram of FIG. 10. The linear geometry can be curvilinear. A practical application might be the irradiation of liquid flowing in a pipe **116**. In this case, a more even distribution of neutron flux can be implemented by bending the line source **110** to suit the form of the pipe **116**. The basic features of the straight line geometry reaction chamber are be retained but there will be a segmented construction as shown in FIG. 10. The vessel wall and anode **112** that may be constructed from the polygonal extrusion discussed above may be fabricated into segments to form an arc. Similarly the external housing and air duct **111** will be fabricated to conform to the general shape of the vessel **112**. The cathode grid will also be produced as segments **114** that are electrically and structurally linked by connecting spindles **115**. The detailed design and construction of the complete cathode assembly will take the structural loads and stability factors into account. The remaining components and supporting sub-systems of the complete neutron generator set may be the same as explained in relation to the first embodiment.

Other embodiments of the linear or curvilinear geometry may be envisaged in order to suit specific applications. It will be apparent that the broad teachings of the present invention can be profitably applied to specific embodiments and applications far beyond what is set forth above for the purposes of illustration. While the invention has been shown and described with reference to certain embodiments thereof, it will be understood by those skilled in the art that various changes in form and detail may be made therein without departing from the scope of the invention as defined by the appended claims.

The preferred features of the invention are applicable to all aspects of the invention and may be used in any possible combination.

Throughout the description and claims of this specification, the words "comprise" and "contain" and variations of the words, for example "comprising" and "comprises", mean "including but not limited to", and are not intended to (and do not) exclude other components, integers, moieties, additives or steps.

## Claims

1. A particle producing apparatus of the inertial electrostatic confinement type utilizing a star mode of a glow discharge induced ion and neutral gas mixture of fusible low atomic number isotope species to generate neutrons such that, during operation, the star mode beams of ions and high kinetic energy neutrals have a general direction of motion which is aligned substantially radially to a central axis of the vessel (72), wherein the apparatus is elongated to a line source of neutrons
**characterised in that**
it comprises a vessel (72) of generally prismatic form having an inner surface and a central axis, within which vessel (72) is disposed an elongate anode electrode structure surrounding an elongate cathode electrode structure having a perimetral surface provided with apertures and the cathode structure (cathode grid (71)) is a compound structure comprising a plurality of unit cell portions stacked end to end in an elongate array therein, the anode (24) and cathode structures (71) being substantially concentric along at least a part of their lengths and substantially coaxial with the vessel (72).

2. An apparatus as claimed in claim 1, wherein the cathode structure has a reticulated or cage-like form.

3. An apparatus as claimed in claim 1 or 2, wherein the cathode structure is supported on a high voltage vacuum feed through (73) at one end thereof and by an insulating support structure (79) at another end thereof.

4. An apparatus as claimed in any preceding claim, wherein the cathode structure or each unit cell portion thereof is defined by two disks of diameter D1 (20) which are separated by a set of spacers (21) with length L1, and wherein the spacers divide a circumference of the perimetral surface of the cathode structure into an even number of substantially equally dimensioned apertures.

5. An apparatus as claimed in claim 4, wherein the apertures of the cathode structure, together with the anode structure, define planes of equal electrostatic potential in an electrostatic field, and wherein a lensing effect is produced by superposition of a charge space of ions and electrons when the apparatus is operating in the star mode.

6. An apparatus as claimed in any preceding claim, wherein the cathode and anode are formed as substantially concentric cylindrical structures.

7. An apparatus as claimed in claim 6, wherein the cylindrical structures are substantially circular in cross section.

8. An apparatus as claimed in any one of claims 1 to 7, wherein the anode structure comprises a prism having a regular polygonal cross section with an even number of sides and wherein the cathode structure has a corresponding even number of apertures about a circumference of its perimetral surface.

9. An apparatus as claimed in claim 8, wherein the apertures in the cathode structure are substantially flat.

10. An apparatus as claimed in claim 8, wherein the apertures in the cathode structure are convex.

11. An apparatus as claimed in claim 8, wherein the apertures in the cathode structure are concave.

12. An apparatus as claimed in claim 8, wherein the apertures in the cathode structure are a combination of flat, convex and/or concave.

13. An apparatus as claimed in any preceding claim, wherein the anode structure has an internal surface (91) that is treated by passive means to promote generation of secondary, relatively low energy electrons when bombarded with relatively high energy electrons.

14. An apparatus as claimed in claim 6 or any claim depending from claim 5, wherein ions formed within a zone of acceptance defined between an internal surface of the anode structure and the perimetral surface of the cathode structure are drawn into the star mode beam (25, 26) around which the zone of acceptance is centred and wherein the cathode structure has aperture curvatures adapted to influence a shape of the planes of equipotential in the electrostatic field so as to increase a size of the zone of acceptance and to capture almost all ions produced by interactions of neutrals with secondary electrons near the internal wall of the anode structure.

15. An apparatus as claimed in any preceding claim, wherein there is provided a chemical getter pump (81) within the vessel, the getter pump (81) including a getter material.

16. An apparatus as claimed in claim 15, wherein the getter pump (81) is adapted such that, upon heating (82, 104, 105), it will cause isotopes of hydrogen loaded in the getter material to diffuse out therefrom and reach an equilibrium partial pressure in the vessel (72) after the vessel has been evacuated and out-gassed, the equilibrium partial pressure corresponding substantially to a getter material pressure and a diffusion loaded density of the hydrogen isotopes in the getter material.

17. An apparatus as claimed in claim 15 or 16, wherein the chemical getter pump (81) effectively captures contaminant chemical species other than noble gases.

18. An apparatus as claimed in any preceding claim, wherein the anode structure and an internal wall of the vessel (72) are a combined functional element that is further provided with external heat transfer surfaces, such as fins (90) or the like, for heat transfer by means of heat transfer fluid flow over the heat transfer surfaces. 90)

19. An apparatus as claimed in claim 18, wherein the anode structure, a secondary electron production means (91), vessel wall and heat transfer surfaces are made out of aluminium.

20. An apparatus as claimed in claim 19, wherein the anode structure, a secondary electron production means, vessel wall and heat transfer surfaces are formed as an integrated structure made out of extruded aluminium.

21. An apparatus as claimed in any preceding claim, wherein the anode and cathode structures are substantially straight in configuration.

22. An apparatus as claimed in any one of claims 1 to 20, wherein the anode and cathode structures are curvilinear in configuration.

23. An apparatus as claimed in claim 21 or 22, wherein the anode and/or cathode structures are segmented along their lengths.

24. An apparatus as claimed in any preceding claim, wherein the cathode structure comprises a plurality of substantially straight segments held together by spindle structures. (60, 61)

## Patentansprüche

1. Partikelerzeugungsvorrichtung in der Bauart mit inertialer elektrostatischer Einschließung, die einen Sternmodus eines durch Glimmentladung induzierten Ionen- und Neutralgasgemischs aus verschmelzbaren Isotopenarten niedriger Ordnungszahl verwendet, um Neutronen derart zu erzeugen, dass während des Betriebs die im Sternmodus vorliegenden Ionenstrahlen und hohe kinetische Energie aufweisende Neutralstoffe eine allgemeine Bewegungsrichtung haben, die im Wesentlichen radial zu einer Mittelachse eines Behälters (72) ausgerichtet ist, wobei die Vorrichtung zu einer linienförmigen Neutronenquelle verlängert ist,
**dadurch gekennzeichnet, dass**
sie den Behälter (72) von allgemein prismatischer Form mit einer Innenfläche und einer Mittelachse aufweist, wobei innerhalb dieses Behälters (72) eine langgestreckte Anodenelektrodenstruktur angeordnet ist, die eine langgestreckte Kathodenelektrodenstruktur mit einer mit Öffnungen versehenen Umfassungsfläche umgibt, und die Kathodenstruktur (das Kathodengitter (71)) eine Verbundstruktur darstellt, die eine Vielzahl von Einheitszellenabschnitten aufweist, die in einer End-zu-End-Anordnung in einer langgestreckten Reihe darin gestapelt sind, wobei die Anodenstruktur (24) und die Kathodenstruktur (71) im Wesentlichen konzentrisch entlang zumindest eines Teils ihrer Längen und im Wesentlichen koaxial zum Behälter (72) sind.

2. Vorrichtung nach Anspruch 1, wobei die Kathodenstruktur eine netzartige oder käfigartige Form hat.

3. Vorrichtung nach Anspruch 1 oder 2, wobei die Kathodenstruktur an ihrem einen Ende durch eine Hochspannungs-Vakuumdurchführung (73) und an ihrem anderen Ende durch eine Isolierungshalterungsstruktur (79) gehaltert ist.

4. Vorrichtung nach jedem vorhergehenden Anspruch, wobei die Kathodenstruktur oder jeder Einheitszellenabschnitt von dieser durch zwei Scheiben (20) mit einem Durchmesser D1 gebildet ist, welche durch einen Satz von Abstandshaltern (21) mit einer Länge L1 getrennt sind, und wobei die Abstandshalter einen Umfang der Umfassungsfläche der Kathodenstruktur in eine gerade Anzahl von im Wesentlichen gleich dimensionierten Öffnungen unterteilen.

5. Vorrichtung nach Anspruch 4, wobei die Öffnungen der Kathodenstruktur, zusammen mit der Anodenstruktur, Ebenen mit gleichem elektrostatischem Potential in einem elektrostatischen Feld bilden, und wobei durch Überlagerung eines Ladungsraums von Ionen und Elektronen ein Linseneffekt erzeugt wird, wenn die Vorrichtung im Sternmodus arbeitet.

6. Vorrichtung nach jedem vorhergehenden Anspruch, wobei die Kathode und die Anode als im Wesentlichen konzentrische, zylindrische Strukturen ausgebildet sind.

7. Vorrichtung nach Anspruch 6, wobei die zylindrischen Strukturen im Querschnitt im Wesentlichen kreisförmig sind.

8. Vorrichtung nach einem der Ansprüche 1 bis 7, wobei die Anodenstruktur ein Prisma mit einem regelmäßigen polygonalen Querschnitt mit einer geraden Anzahl an Seiten aufweist und wobei die Kathodenstruktur eine entsprechende gerade Anzahl an Öffnungen um einen Umfang ihrer Umfassungsfläche aufweist.

9. Vorrichtung nach Anspruch 8, wobei die Öffnungen in der Kathodenstruktur im Wesentlichen flach sind.

10. Vorrichtung nach Anspruch 8, wobei die Öffnungen in der Kathodenstruktur konvex sind.

11. Vorrichtung nach Anspruch 8, wobei die Öffnungen in der Kathodenstruktur konkav sind.

12. Vorrichtung nach Anspruch 8, wobei die Öffnungen in der Kathodenstruktur eine Kombination aus flach, konvex und/oder konkav darstellen.

13. Vorrichtung nach jedem vorhergehenden Anspruch, wobei die Anodenstruktur eine Innenfläche (91) hat, die durch ein passives Mittel behandelt ist, um bei Beschuss mit relativ hochenergetischen Elektronen die Erzeugung von relativ niedrigenergetischen Sekundärelektronen zu fördern.

14. Vorrichtung nach Anspruch 6 oder nach jedem von Anspruch 5 abhängigen Anspruch, wobei Ionen, die innerhalb einer zwischen einer Innenfläche der Anodenstruktur und der Umfassungsfläche der Kathodenstruktur definierten Akzeptanzzone in den Sternmodusstrahl (25, 26) gezogen werden, um den die Akzeptanzzone zentriert ist, und wobei die Kathodenstruktur Öffnungskrümmungen aufweist, die dazu angepasst sind, eine Form der Ebenen gleich hohen Potentials im elektrostatischen Feld zu beeinflussen, um die Größe der Akzeptanzzone zu erhöhen und nahezu alle Ionen einzufangen, die durch Wechselwirkungen von Neutralstoffen mit Sekundärelektronen nahe der Innenwand der Anodenstruktur entstehen.

15. Vorrichtung nach jedem vorhergehenden Anspruch, wobei innerhalb des Behälters eine Chemikalien-Getterpumpe (81) vorgesehen ist, wobei die Getterpumpe ein Gettermaterial enthält.

16. Vorrichtung nach Anspruch 15, wobei die Getterpumpe (81) dazu angepasst ist, dass sie bei Erwärmung (82, 104, 105) veranlasst, dass im Gettermaterial enthaltene Wasserstoffisotope aus dem Gettermaterial ausdiffundieren und einen Gleichgewichts-Partialdruck im Behälter (72) erreichen, wenn der Behälter leergepumpt und ausgegast ist, wobei der Gleichgewichts-Partialdruck im Wesentlichen einem Gettermaterialdruck und einer durch Diffusion verursachten Dichte der Wasserstoffisotope im Gettermaterial entspricht.

17. Vorrichtung nach Anspruch 15 oder 16, wobei die Chemikalien-Getterpumpe (81) außer Edelgasen verunreinigende chemische Stoffe effektiv einfängt.

18. Vorrichtung nach jedem vorhergehenden Anspruch, wobei die Anodenstruktur und eine Innenwand des Behälters (72) ein kombiniertes funktionales Element darstellen, das darüber hinaus mit äußeren Wärmeübertragungsflächen wie z.B. Rippen (90) oder dergleichen versehen ist, die der Wärmeübertragung mittels eines Wärmeübertragungsfluids über die Wärmeübertragungsflächen dienen.

19. Vorrichtung nach Anspruch 18, wobei die Anodenstruktur, ein Mittel (91) zur Erzeugung von Sekundärelektronen, die Behälterwand und die Wärmeübertragungsflächen aus Aluminium bestehen.

20. Vorrichtung nach Anspruch 19, wobei die Anodenstruktur, ein Mittel zur Erzeugung von Sekundärelektronen, die Behälterwand und die Wärmeübertragungsflächen als einteilige, aus extrudiertem Aluminium bestehende Struktur gebildet sind.

21. Vorrichtung nach jedem vorhergehenden Anspruch, wobei die Anodenstruktur und die Kathodenstruktur eine im Wesentlichen geradlinige Gestaltung haben.

22. Vorrichtung nach einem der Ansprüche 1 bis 20, wobei die Anodenstruktur und die Kathodenstruktur eine gekrümmte Gestaltung haben.

23. Vorrichtung nach Anspruch 21 oder 22, wobei die Anodenstruktur und/oder die Kathodenstruktur in der Länge segmentiert ist bzw. sind.

24. Vorrichtung nach jedem vorhergehenden Anspruch, wobei die Kathodenstruktur mehrere im Wesentlichen geradlinige Segmente aufweist, die durch Wellenstrukturen (60, 61) zusammengehalten sind.

## Revendications

1. Appareil de production de particules du type à confinement inertiel électrostatique utilisant un mode étoile d'un ion induit par décharge luminescente et un mélange gazeux neutre d'espèces isotopes de faible numéro atomique fusibles afin de générer des neutrons de telle sorte que, pendant le fonctionnement, les faisceaux d'ions du mode étoile et les neutres à énergie cinétique élevée ont une direction générale de mouvement qui est alignée sensiblement radialement par rapport à un axe central de la cuve (72), dans lequel l'appareil est allongé pour une source linéaire de neutrons
**caractérisé en ce**
**qu'**il comprend une cuve (72) de forme globalement prismatique ayant une surface interne et un axe central, cuve (72) au sein de laquelle est disposée une structure d'électrode anode allongée entourant une structure d'électrode cathode allongée ayant une surface périmétrale pourvue d'ouvertures et la structure de cathode (cathode grille (71)) est une structure composite comprenant une pluralité de portions de cellules unitaires qui y sont empilées bout à bout selon un agencement allongé, les structures d'anode (24) et de cathode (71) étant sensiblement concentriques le long d'au moins une partie de leurs longueurs et sensiblement coaxiales à la cuve (72).

2. Appareil selon la revendication 1, dans lequel la structure de cathode a une forme réticulée ou de type cage.

3. Appareil selon la revendication 1 ou 2, dans lequel la structure de cathode est supportée sur un passage d'alimentation sous vide haute tension (73) à une extrémité de celle-ci et par une structure de support isolante (79) à une autre extrémité de celle-ci.

4. Appareil selon l'une quelconque des revendications précédentes, dans lequel la structure de cathode ou chaque portion de cellules unitaires de celle-ci est définie par deux disques de diamètre D1 (20) qui sont séparés par un ensemble d'espaceurs (21) ayant une longueur L1, et dans lequel les espaceurs divisent une circonférence de la surface périmétrale de la structure de cathode en un nombre pair d'ouvertures ayant des dimensions sensiblement égales.

5. Appareil selon la revendication 4, dans lequel les ouvertures de la structure de cathode, conjointement avec la structure d'anode, définissent des plans de potentiel électrostatique égal dans un champ électrostatique, et dans lequel un effet lentille est produit par superposition d'un espace de charge d'ions et d'électrons lorsque l'appareil fonctionne en mode étoile.

6. Appareil selon l'une quelconque des revendications précédentes, dans lequel la cathode et l'anode sont formées en tant que structures cylindriques sensiblement concentriques.

7. Appareil selon la revendication 6, dans lequel les structures cylindriques ont une section transversale sensiblement circulaire.

8. Appareil selon l'une quelconque des revendications 1 à 7, dans lequel la structure d'anode comprend un prisme ayant une section transversale polygonale régulière avec un nombre pair de côtés et dans lequel la structure de cathode a un nombre pair correspondant d'ouvertures autour d'une circonférence de sa surface périmétrale.

9. Appareil selon la revendication 8, dans lequel les ouvertures dans la structure de cathode sont sensiblement plates.

10. Appareil selon la revendication 8, dans lequel les ouvertures dans la structure de cathode sont convexes.

11. Appareil selon la revendication 8, dans lequel les ouvertures dans la structure de cathode sont concaves.

12. Appareil selon la revendication 8, dans lequel les ouvertures dans la structure de cathode sont une combinaison d'ouvertures plates, convexes et/ou concaves.

13. Appareil selon l'une quelconque des revendications précédentes, dans lequel la structure d'anode a une surface interne (91) qui est traitée par des moyens passifs afin de faciliter la génération d'électrons secondaires ayant une énergie relativement faible lorsqu'elle est bombardée par des électrons ayant une énergie relativement élevée.

14. Appareil selon la revendication 6 ou l'une quelconque des revendications dépendantes de la revendication 5, dans lequel les ions formés au sein d'une zone d'acceptation définie entre une surface interne de la structure d'anode et la surface périmétrale de la structure de cathode sont attirés dans le faisceau en mode étoile (25, 26) autour duquel la zone de réception est centrée et dans lequel la structure de cathode a des courbures d'ouverture adaptées pour influer sur une forme des plans d'équipotentiel dans le champ électrostatique de manière à augmenter une taille de la zone de réception et à capturer presque tous les ions produits par interactions de neutres avec des électrons secondaires près de la paroi interne de la structure d'anode.

15. Appareil selon l'une quelconque des revendications précédentes, dans lequel il est prévu une pompe à sorbeur chimique (81) à l'intérieur de la cuve, la pompe à sorbeur (81) comprenant un matériau sorbeur.

16. Appareil selon la revendication 15, dans lequel la pompe à sorbeur (81) est adaptée de telle sorte que, lors d'un chauffage (82, 104, 105), elle entraînera la diffusion des isotopes d'hydrogène chargés dans le matériau sorbeur hors de celui-ci et atteindra une pression partielle à l'équilibre dans la cuve (72) une fois que la cuve aura été vidée et dégazée, la pression partielle à l'équilibre correspondant sensiblement à une pression de matériau sorbeur et à une densité chargée de diffusion des isotopes d'hydrogène dans le matériau sorbeur.

17. Appareil selon la revendication 15 ou 16, dans lequel la pompe à sorbeur chimique (81) capture efficacement des espèces chimiques de contaminants autres que les gaz nobles.

18. Appareil selon l'une quelconque des revendications précédentes, dans lequel la structure d'anode et une paroi interne de la cuve (72) sont un élément fonctionnel combiné qui est en outre pourvu de surfaces de transfert de chaleur externes, telles que des ailettes (90) ou similaires, pour le transfert de chaleur au moyen d'un écoulement de fluide de transfert de chaleur sur les surfaces de transfert de chaleur (90).

19. Appareil selon la revendication 18, dans lequel la structure d'anode, un moyen de production d'électrons secondaires (91), la paroi de la cuve et les surfaces de transfert de chaleur sont réalisés en aluminium.

20. Appareil selon la revendication 19, dans lequel la structure d'anode, un moyen de production d'électrons secondaires, la paroi de la cuve et les surfaces de transfert de chaleur sont formés en tant que structure intégrée réalisée en aluminium extrudé.

21. Appareil selon l'une quelconque des revendications précédentes, dans lequel les structures d'anode et de cathode ont une configuration sensiblement rectiligne.

22. Appareil selon l'une quelconque des revendications 1 à 20, dans lequel les structures d'anode et de cathode ont une configuration sensiblement curvilinéaire.

23. Appareil selon la revendication 21 ou 22, dans lequel les structures d'anode et/ou de cathode sont segmentées sur leurs longueurs.

24. Appareil selon l'une quelconque des revendications précédentes, dans lequel la structure de cathode comprend une pluralité de segments sensiblement rectilignes maintenus ensemble par des structures à broche (60, 61).
